(19) Europäisches Patentamt
European Patent Office
Office européen des brevets

(11) EP 2 187 747 B1

(12) **EUROPÄISCHE PATENTSCHRIFT**

(45) Veröffentlichungstag und Bekanntmachung des Hinweises auf die Patenterteilung:
**13.04.2011 Patentblatt 2011/15**

(21) Anmeldenummer: **08786613.3**

(22) Anmeldetag: **30.07.2008**

(51) Int Cl.:
***A01P 3/00*** (2006.01) ***A01N 43/54*** (2006.01)
***A01N 47/14*** (2006.01)

(86) Internationale Anmeldenummer:
**PCT/EP2008/059979**

(87) Internationale Veröffentlichungsnummer:
**WO 2009/019176 (12.02.2009 Gazette 2009/07)**

(54) **FUNGIZIDE MISCHUNGEN**
FUNGICIDAL MIXTURES
MELANGES FONGICIDES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.08.2007 EP 07114051**

(43) Veröffentlichungstag der Anmeldung:
**26.05.2010 Patentblatt 2010/21**

(73) Patentinhaber: **BASF SE**
**67056 Ludwigshafen (DE)**

(72) Erfinder:
- **GOLD, Randall Evan**
  **67283 Obrigheim (DE)**
- **BESTMAN, Hans**
  **67434 Neustadt/Weinstrasse (DE)**
- **HADEN, Egon**
  **67061 Ludwigshafen (DE)**

(56) Entgegenhaltungen:
**WO-A-2005/104847**

- **SHOLBERG PETER L ET AL: "Effect of preharvest application of cyprodinil on postharvest decay of apples caused by Botrytis cinerea." PLANT DISEASE, Bd. 87, Nr. 9, September 2003 (2003-09), Seiten 1067-1071, XP002518262 ISSN: 0191-2917**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 187 747 B1

Printed by Jouve, 75001 PARIS (FR)

## Beschreibung

Die vorliegende Erfindung betrifft fungizide Mischungen, enthaltend als aktive Komponenten

1) ein Pyrimidinderivat der Formel I

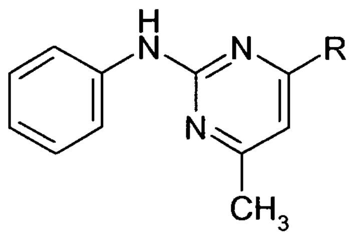

I

in der R für Methyl steht,
und

2) Metiram II

in einer synergistisch wirksamen Menge.

Außerdem betrifft die Erfindung ein Verfahren zur Bekämpfung von Schadpilzen mit Mischungen der Verbindung I mit der Verbindung II und die Verwendung der Verbindung I mit der Verbindung II zur Herstellung derartiger Mischungen sowie Mittel, die diese Mischungen enthalten

Die Verbindungen der Formel I, ihre Herstellung und ihre Wirkung gegen Schadpilze sind ebenfalls aus der Literatur bekannt:

| Verbindung Nr. | R | Common name | Literatur |
|---|---|---|---|
| I - 1 | Methyl | pyrimethanil | DD-A 151 404 |

Sholberg et al. "Effect of preharvest application of Cyprodinil on post harvest decay of apples caused by Botrytis cinerea, "Plant Disease, vol.87, no. 9, 2003, 1067-1071, beschreibt synergistische Fungizide enthaltend Metirarm und Cyprodinil.

Der voranstehend als Komponente 2 genannte Wirkstoff Metiram ist in The Pesticide Manual, 13th Edition, S. 666 beschrieben.

Im Hinblick auf eine Senkung der Aufwandmengen und eine Verbreiterung des Wirkungsspektrums der bekannten Verbindungen lagen der vorliegenden Erfindung Mischungen als Aufgabe zugrunde, die bei verringerter Gesamtmenge an ausgebrachten Wirkstoffen eine verbesserte Wirkung gegen Schadpilze, insbesondere für bestimmte Indikationen, zeigen.

Demgemäss wurden die eingangs definierten Mischungen gefunden. Es wurde außerdem gefunden, dass sich bei gleichzeitiger gemeinsamer oder getrennter Anwendung der Verbindung I und der Verbindung II oder bei Anwendung der Verbindung I und der Verbindung II nacheinander Schadpilze besser bekämpfen lassen als mit den Einzelverbindungen (synergistische Mischungen). Durch gleichzeitige gemeinsame oder getrennte Anwendung der Verbindung I mit der Verbindung II wird die fungizide Wirksamkeit in überadditivem Maße erhöht.

Die Mischungen der Verbindung der Formel I und der Verbindung der Formel II bzw. die erfindungsgemäßen Zusammensetzungen eignen sich als Fungizide zur Bekämpfung von Schadpilzen. Sie zeichnen sich aus durch eine hervorragende Wirksamkeit gegen ein breites Spektrum von pflanzenpathogenen Pilzen einschließlich bodenbürtiger Pathogene, welche insbesondere aus den Klassen der Plasmodiophoromyceten, Peronosporomyceten (Syn. Oomyceten), Chytridiomyceten, Zygomyceten, Ascomyceten, Basidiomyceten und Deuteromyceten (Syn. Fungi imperfecti) stammen. Sie sind zum Teil systemisch wirksam und können im Pflanzenschutz als Blatt-, Beiz- und Bodenfungizide eingesetzt werden. Darüber hinaus sind sie geeignet für die Bekämpfung von Pilzen, die unter anderem das Holz oder die Wurzeln von Pflanzen befallen.

Besondere Bedeutung haben die Mischungen der Verbindung der Formel I und der Verbindung der Formel II und die erfindungsgemäßen Zusammensetzungen für die Bekämpfung einer Vielzahl von pathogenen Pilzen an verschiedenen Kulturpflanzen wie Getreide, z. B. Weizen, Roggen, Gerste, Triticale, Hafer oder Reis; Rüben, z. B. Zucker oder Futterrüben; Kern-, Stein und Beerenobst, z. B. Äpfel, Birnen, Pflaumen, Pfirsiche, Mandeln, Kirschen, Erdbeeren, Himbeeren, Johannisbeeren oder Stachelbeeren; Leguminosen, z. B. Bohnen, Linsen, Erbsen, Luzerne oder Soja; Ölpflanzen, z. B. Raps, Senf, Oliven, Sonnenblumen, Kokosnuss, Kakao, Rizinusbohnen, Ölpalme, Erdnüsse oder Soja; Kürbisgewächse, z. B. Kürbissse, Gurken oder Melonen; Faserpflanzen, z. B. Baumwolle, Flachs, Hanf oder Jute; Zitrusfrüchte, z. B. Orangen, Zitronen, Pampelmusen oder Mandarinen; Gemüsepflanzen, z. B. Spinat, Salat, Spargel, Kohlpflanzen, Möhren, Zwiebeln, Tomaten, Kartoffeln, Kürbis oder Paprika; Lorbeergewächse, z. B. Avocados, Zimt oder Kampher; Energie- und Rohstoffpflanzen, z. B. Mais, Soja, Weizen, Raps, Zuckerrohr oder Ölpalme; Mais; Tabak; Nüsse; Kaffee; Tee; Bananen; Wein (Tafel- und Weintrauben); Hopfen; Gras, z. B. Rasen; Kautschukpflanzen; Zier- und Forstpflanzen, z. B. Blumen, Sträucher, Laub- und Nadelbäume sowie an dem Vermehrungsmaterial, z. B. Samen, und dem Erntegut dieser Pflanzen.

Vorzugsweise werden die Mischungen der Verbindung der Formel I und der Verbindung der Formel II bzw. die erfindungsgemäßen Zusammensetzungen zur Bekämpfung einer Vielzahl von pilzlichen Pathogenen in Ackerbaukulturen, z. B. Kartoffeln, Zuckerrüben, Tabak, Weizen, Roggen, Gerste, Hafer, Reis, Mais, Baumwolle, Soja, Raps, Hülsenfrüchte, Sonnenblumen, Kaffee oder Zuckerrohr; Obst-, Wein- und Zierpflanzen und Gemüsepflanzen, z. B. Gurken, Tomaten, Bohnen und Kürbisse sowie an dem Vermehrungsmaterial, z. B. Samen, und dem Erntegut dieser Pflanzen verwendet.

Der Begriff pflanzliche Vermehrungsmaterialien umfasst alle generativen Teile der Pflanze, z. B. Samen, und vegetative Pflanzenteile, wie Stecklinge und Knollen (z. B. Kartoffeln), die zur Vermehrung einer Pflanze genutzt werden können. Dazu gehören Samen, Wurzeln, Früchte, Knollen, Zwiebeln, Rhizome, Triebe und andere Pflanzenteile, einschließlich Keimlingen und Jungpflanzen, die nach der Keimung oder dem Auflaufen umgepflanzt werden. Die Jungpflanzen können durch eine teilweise oder vollständige Behandlung, z. B. durch Eintauchen oder Gießen, vor Schadpilzen geschützt werden.

Die Behandlung von pflanzlichen Vermehrungsmaterialien mit den Mischungen der Verbindung der Formel I und der Verbindung der Formel II bzw. den erfindungsgemäßen Zusammensetzungen wird zur Bekämpfung einer Vielzahl von pilzlichen Pathogenen in Getreidekulturen, z. B. Weizen, Roggen, Gerste oder Hafer; Reis, Mais, Baumwolle und Soja eingesetzt.

Der Begriff Kulturpflanzen schließt auch solche Pflanzen ein, die durch Züchtung, Mutagenese oder gentechnische Methoden verändert wurden einschließlich der auf dem Markt oder in Entwicklung befindlichen biotechnologischen Agrarprodukte (siehe z.B. http://www.bio.org/speeches/pubs/er/agri_products.asp). Gentechnisch veränderte Pflanzen sind Pflanzen, deren genetisches Material in einer Weise verändert worden ist, wie sie unter natürlichen Bedingungen durch Kreuzen, Mutationen oder natürliche Rekombination (d.h. Neuzusammenstellung der Erbinformation) nicht vorkommt. Dabei werden in der Regel ein oder mehrere Gene in das Erbgut der Pflanze integriert, um die Eigenschaften der Pflanze zu verbessern. Derartige gentechnische Veränderungen umfassen auch posttranslationale Modifikationen von Proteinen, Oligo- oder Polypeptiden z.B. mittels Glykolsylierung oder Bindung von Polymeren wie z.B. prenylierter, acetylierter oder farnelysierter Reste oder PEG-Reste.

Beispielhaft seien Pflanzen genannt, die durch züchterische und gentechnische Maßnahmen eine Toleranz gegen bestimmter Herbizidklassen, wie Hydroxyphenylpyruvat-Dioxygenase (HPPD)-Inhibitoren, Acetolactat-Synthase (ALS)-Inhibitoren wie z. B. Sulfonylharnstoffe (EP-A 257 993, US 5,013,659) oder Imidazolinone (z. B. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073), Enolpyruvylshikimat-3-Phosphat-Synthase (EPSPS)-Inhibitoren wie z. B. Glyphosat (siehe z. B. WO 92/00377), Glutaminsynthetase (GS)-Inhibitoren wie z. B. Glufosinat (siehe z. B. EP-A 242 236, EP-A 242 246) oder Oxynil-Herbizide (siehe z. B. US 5,559,024) erworben haben. Durch Züchtung und Mutagenese wurde z. B. Clearfield®-Raps (BASF SE, Deutschland) erzeugt, der eine Toleranz gegen Imidazolinone, z. B. Imazamox, hat. Mit Hilfe gentechnischer Methoden wurden Kulturpflanzen, wie Soja, Baumwolle, Mais, Rüben und Raps, erzeugt, die resistent gegen Glyphosat oder Glufosinat sind, erzeugt, welche unter den Handelsnamen RoudupReady® (Glyphosat-resistent, Monsanto, U.S.A.) und Liberty Link® (Glufosinatresistent, Bayer CropScience, Detuschland) erhältlich sind.

Weiterhin sind auch Pflanzen umfasst, die mit Hilfe gentechnischer Maßnahmen ein oder mehrere Toxine, z. B. solche aus dem Bakterienstamm Bacillus, produzieren. Toxine, die durch solche gentechnisch veränderten Pflanzen hergestellt werden, umfassen z. B. insektizide Proteine von Bacillus spp., insbesondere von B. thuringiensis, wie die Endotoxine Cry1Ab, Cry1Ac, Cry1F, Cry1Fa2, Cry2Ab, Cry3A, Cry3Bb1, Cry9c, Cry34Ab1 oder Cry35Ab1; oder vegetative insektizide Proteine (VIPs), z. B. VIP1, VIP2, VIP3, oder VIP3A; insektizide Proteine von Nematoden-kolonisierenden Bakterien, z. B. Photorhabdus spp. oder Xenorhabdus spp.; Toxine aus tierischen Organismen, z. B. Wepsen,-, Spinnen- oder Skorpionstoxine; pilzliche Toxine, z. B. aus Streptomyceten; pflanzliche Lektine, z. B. aus Erbse oder Gerste; Agglutinine; Proteinase-Inhibitoren, z. B. Trypsin-Inhibitoren, Serinprotease-Inhibitoren, Patatin, Cystatin oder Papain-Inhibitoren; Ribosomen-inaktivierende Proteine (RIPs), z. B. Ricin, Mais-RIP, Abrin, Luffin, Saporin oder Bryodin; Steroid-metabolisierende Enzyme, z. B. 3-Hydroxysteroid-Oxidase, Ecdysteroid-IDP-Glycosyl-Transferase, Cholesterinoxidase, Ecdyson-Inhibitoren oder HMG-CoA-Reduktase; Ionenkanalblocker, z. B. Inhibitoren von Natrium- oder Calziumkanälen; Juvenilhormon-Esterase; Rezeptoren für das diuretischen Hormon (Helicokininrezeptoren); Stilbensynthase, Bibenzylsynthase, Chitinasen und Glucanasen. Diese Toxine können in den Pflanzen auch als Prätoxine, Hybridproteine, verkürzte oder anderweitig modfizierte Proteine produziert werden. Hybridproteine zeichnen sich durch eine neue Kombination von verschiedenen Proteindomänen aus (siehe z. B. WO 2002/015701). Weitere Besipiele für derartige Toxine oder gentechnisch veränderte Pflanzen, die diese Toxine produzieren, sind in EP-A 374 753, WO 93/07278, WO 95/34656, EP-A 427 529, EP-A 451 878, WO 03/18810 und WO 03/52073 offenbart. Die Methoden zur Herstellung dieser gentechnisch veränderten Pflanzen sind dem Fachmann bekannt und z. B. in den oben erwähnten Publikationen dargelegt. Zahlreiche der zuvor genannten Toxine verleihen den Pflanzen, die diese produzieren, eine Toleranz gegen Schädlinge aus allen taxonomischen Arthropodenklassen, insbesondere gegen Käfer (Coeleropta), Zweiflügler (Diptera) und Schmetterlinge (Lepidoptera) und gegen Nematoden (Nematoda). Gentechnisch veränderte Pflanzen, die ein oder mehrere Gene, die für insektizide Toxine kodieren, produzieren sind z. B. in den oben erwähnten Publikationen beschrieben und zum Teil kommerziell erhältlich, wie z. B. YieldGard® (Maissorten, die das Toxin Cry1Ab produzieren), YieldGard® Plus (Maissorten, die die Toxine Cry1Ab und Cry3Bb1 produzieren), Starlink® (Maissorten, die das Toxin Cry9c produzieren), Herculex® RW (Maissorten, die die Toxine Cry34Ab1, Cry35Ab1 und das Enzym Phosphinothricin-N-Acetyltransferase [PAT] produzieren); NuCOTN® 33B (Baumwollsorten, die das Toxin Cry1Ac produzieren), Bollgard® I (Baumwollsorten, die das Toxin Cry1Ac produzieren), Bollgard® II (Baumwollsorten, die die Toxine Cry1Ac und Cry2Ab2 produzieren); VIP-COT® (Baumwollsorten, die ein VIP-Toxin produzieren); NewLeaf® (Kartoffelsorten, die das Toxin Cry3A produzieren); Bt-Xtra®, NatureGard®, KnockOut®, BiteGard®, Protecta®, Bt11 (z. B. Agrisure® CB) und Bt176 von Syngenta Seeds SAS, Frankreich, (Maissorten, die das Toxin Cry1Ab und das PAT-Enyzm produzieren), MIR604 von Syngenta Seeds SAS, Frankreich (Maissorten, die ein modifizierte Version des Toxins Cry3A produzieren, siehe hierzu WO 03/018810), MON 863 von Monsanto Europe S.A., Belgien (Maissorten, die das Toxin Cry3Bb1 produzieren), IPC 531 von Monsanto Europe S.A., Belgien (Baumwollsorten, die eine modifizierte Version des Toxins Cry1Ac produzieren) und 1507 von Pioneer Overseas Corporation, Belgien (Maissorten, die das Toxin Cry1 F und das PAT-Enyzm produzieren).

Weiterhin sind auch Pflanzen umfasst, die mit Hilfe gentechnische Maßnahmen ein oder mehrere Proteine produzieren, die eine erhöhte Resistenz oder Widerstandfähigkeit gegen bakterielle, virale oder pilzliche Pathogene bewirken, wie z. B. sogenannte Pathogenesis-related-Proteine (PR-Proteine, siehe EP-A 0 392 225), Resistenzproteine (z. B. Kartoffelsorten, die zwei Resistenzgene gegen Phytophthora infestans aus der mexikanischen Wildkartoffel Solanum bulbocastanum produzieren) oder T4-Lysozym (z. B. Kartoffelsorten, die durch die Produktion diese Proteins resistent gegen Bakterien wie Erwinia amylvora ist).

Weiterhin sind auch Pflanzen umfasst, deren Produktivität mit Hilfe gentechnischer Methoden verbessert wurde, indem z. B. die Ertragsfähigkeit (z. B. Biomasse, Kornertrag, Stärke-, Öl- oder Proteingehalt), die Toleranz gegenüber Trockenheit, Salz oder anderen begrenzenden Umweltfaktoren oder die Widerstandsfähigkeit gegenüber Schädlingen und pilzlichen, bakteriellen und viralen Pathogenen gesteigert wird.

Weiterhin sind auch Pflanzen umfasst, deren Inhaltsstoffe insbesondere zur Verbesserung der menschlichen oder tierischen Ernährung mit Hilfe gentechnischer Methoden verändert wurden, indem z. B. Ölpflanzen gesundheitsfördernde langkettige Omega-3-Fettsäuren oder einfach ungesättigte Omega-9-Fettsäuren (z. B. Nexera®-Raps, DOW Agro Sciences, Kanada) produzieren.

Weiterhin sind auch Pflanzen umfasst, die zur verbesserten Produktion von Rohstoffen mit Hilfe gentechnischer Methoden verändert wurden, indem z. B. der Amylopektin-Gehalt von Kartoffeln (Amflora®-Kartoffel, BASF SE, Deutschland) erhöht wurde.

Speziell eignen sich die Mischungen der Verbindung der Formel I und der Verbindung der Formel II bzw. die erfindungsgemäßen Zusammensetzungen zur Bekämpfung folgender Pflanzenkrankheiten:

Albugo spp. (Weißer Rost) an Zierpflanzen, Gemüsekulturen (z.B: A. candida) und Sonnenblumen (z. B. A. tragopogonis); Alternaria spp. (Schwärze, Schwarzfleckigkeit) an Gemüse, Raps (z. B. A. brassicola oder A. brassicae), Zuckerrüben (z. B. A. tenuis), Obst, Reis, Sojabohnen sowie an Kartoffeln (z. B. A. solani oder A. alternata) und Tomaten (z. B. A. solani oder A. alternata) und Alternaria spp. (Ährenschwärze) an Weizen; Aphanomyces spp. an Zuckerrüben und Gemüse; Ascochyta spp. an Getreide und Gemüse, z. B. A. tritici (Blattdürre) an Weizen und A. hordei an Gerste; Bipolaris und Drechslera spp. (Teleomorph: Cochliobolus spp.) an Mais (z. B. D. maydis), Getreide (z. B. B. sorokiniana: Braunfleckigkeit), Reis (z. B. B. oryzae) und Rasen; Blumeria (früher: Erysiphe) graminis (Echter Mehltau) an Getreide (z. B. Weizen oder Gerste); Botryosphaeria spp. ('Black Dead Arm Disease') an Weinreben (z. B. B. obtusa); Botrytis cinerea (Teleomorph: Botryotinia fuckeliana: Grauschimmel, Graufäule) an Beeren- und Kernobst (u.a. Erdbeeren), Gemüse (u.a. Salat, Möhren, Sellerie und Kohl), Raps, Blumen, Weinreben, Forstkulturen und Weizen (Ährenschimmel); Bremia lactucae (Falscher Mehltau) an Salat; Ceratocystis (Syn. Ophiostoma) spp. (Bläuepilz) an Laub- und Nadelgehölzen, z. B. C. ulmi (Ulmensterben, Holländische Ulmenkrankheit) an Ulmen; Cercospora spp. (Cercospora-Blattflecken) an Mais, Reis, Zuckerrüben (z. B. C. beticola), Zuckerrohr, Gemüse, Kaffee, Sojabohnen (z. B. C. sojina oder C. kikuchii) und Reis; Cladosporium spp. an Tomate (z. B. C. fulvum: Samtflecken-Krankheit) und Getreide, z. B. C. herbarum

(Ährenschwärze) an Weizen; Claviceps purpurea (Mutterkorn) an Getreide; Cochliobolus (Anamorph: Helminthosporium oder Bipolaris) spp. (Blattflecken) an Mais (z. B. C. carbonum) , Getreide (z. B. C. sativus, Anamorph: B. sorokiniana: Braunfleckigkeit) und Reis (z. B. C. miyabeanus, Anamorph: H. oryzae); Colletotrichum (Teleomorph: Glomerella) spp. (Brennflecken, Anthraknose) an Baumwolle (z. B. C. gossypii), Mais (z. B. C. graminicola: Stängelfäule und Brennflecken), Beerenobst, Kartoffeln (z. B. C. coccodes: Welke), Bohnen (z. B. C. lindemuthianum) und Sojabohnen (z. B. C. truncatum); Corticium spp., z. B. C. sasakii (Blattscheidenbrand) an Reis; Corynespora cassiicola (Blattflecken) an Sojabohnen und Zierpflanzen; Cycloconium spp., z. B. C. oleaginum an Olive; Cylindrocarpon spp. (z. B. Obstbaum-Krebs oder Rebensterben, Teleomorph: Nectria oder Neonectria spp.) an Obstgehölzen, Weinreben (z. B. C. liriodendri, Teleomorph: Neonectria liriodendri, ‚Black Foot Disease') und vielen Ziergehölzen; Dematophora (Teleomorph: Rosellinia) necatrix (Wurzel-/Stängelfäule) an Sojabohnen; Diaporthe spp. z. B. D. phaseolorum (Stängelkrankheit) an Sojabohnen; Drechslera (Syn. Helminthosporium, Teleomorph: Pyrenophora) spp. an Mais, Getreide, wie Gerste (z. B. D. teres, Netzflecken) und an Weizen (z. B. D. tritici-repentis: DTR-Blattdürre), Reis und Rasen; Esca-Krankheit (Rebstocksterben, Apoplexie) an Weinrebe, verursacht durch Formitiporia (Syn. Phellinus) punctata, F. mediterranea, Phaeomoniella chlamydospora (früher Phaeoacremonium chlamydosporum), Phaeoacremonium aleophilum und/oder Botryosphaeria obtusa; Elsinoe spp. an Kern- (E. pyri) und Beerenobst (E. veneta: Brennflecken) sowie Weinrebe (E. ampelina: Brennflecken); Entyloma oryzae (Blattbrand) an Reis; Epicoccum spp. (Ährenschwärze) an Weizen; Erysiphe spp. (Echter Mehltau) an Zuckerrübe (E. betae), Gemüse (z. B. E. pisi), wie Gurken- (z. B. E. cichoracearum) und Kohlgewächsen, wie Raps (z. B. E. cruciferarum).; Eutypa lata (Eutypa-Krebs oder -Absterben, Anamorph: Cytosporina lata, Syn. Libertella blepharis) an Obstgehölzen, Weinreben und vielen Ziergehölzen; Exserohilum (Syn. Helminthosporium) spp. an Mais (z. B. E. turcicum); Fusarium (Teleomorph: Gibberella) spp. (Welke, Wurzel- und Stängelfäule) an verschiedenen Pflanzen, wie z. B. F. graminearum oder F. culmorum (Wurzelfäule und Taub- oder Weißährigkeit) an Getreide (z. B. Weizen oder Gerste), F. oxysporum an Tomaten, F. solani an Sojabohnen und F. verticillioides an Mais; Gaeumannomyces graminis (Schwarzbeinigkeit) an Getreide (z. B. Weizen oder Gerste) und Mais; Gibberella spp. an Getreide (z. B. G. zeae) und Reis (z. B. G. fujikuroi: Bakanae-Krankheit); Glomerella cingulata an Weinrebe, Kernobst und anderen Pflanzen und G. gossypii an Baumwolle; Grainstaining complex an Reis; Guignardia bidwellii (Schwarzfäule) an Weinrebe; Gymnosporangium spp. an Rosaceen und Wacholder, z. B. G. sabinae (Birnengitterrost) an Birnen; Helminthosporium spp. (Syn. Drechslera, Teleomorph: Cochliobolus) an Mais, Getreide und Reis; Hemileia spp., z. B. H. vastatrix (Kaffeeblattrost) an Kaffee; Isariopsis clavispora (Syn. Cladosporium vitis) an Weinrebe; Macrophomina phaseolina (Syn. phaseoli) (Wurzel-/Stängelfäule) an Sojabohnen und Baumwolle; Microdochium (Syn. Fusarium) nivale (Schneeschimmel) an Getreide (z. B. Weizen oder Gerste); Microsphaera diffusa (Echter Mehltau) an Sojabohnen; Monilinia spp., z. B. M. laxa, M. fructicola und M. fructigena (Blüten- und Spitzendürre) an Steinobst und anderen Rosaceen; Mycosphaerella spp. an Getreide, Bananen, Beerenobst und Erdnüssen, wie z. B. M. graminicola (Anamorph: Septoria tritici, Septoria-Blattdürre) an Weizen oder M. fijiensis (Schwarze Sigatoka-Krankheit) an Bananen; Peronospora spp. (Falscher Mehltau) an Kohl (z. B. P. brassicae), Raps (z. B. P. parasitica), Zwiebelgewächsen (z. B. P. destructor), Tabak (P. tabacina) und Sojabohnen (z. B. P. manshurica); Phakopsora pachyrhizi und P. meibomiae (Sojabohnenrost) an Sojabohnen; Phialophora spp. z. B. an Weinreben (z. B. P. tracheiphila und P. tetraspora) und Sojabohnen (z. B. P. gregata: Stängelkrankheit); Phoma lingam (Wurzel- und Stängelfäule) an Raps und Kohl und P. betae (Blattflecken) an Zuckerrüben; Phomopsis spp. an Sonnenblumen, Weinrebe (z. B. P. viticola: Schwarzflecken-Krankheit) und Sojabohnen (z. B. Stielfäule: P. phaseoli, Teleomorph: Diaporthe phaseolorum); Physoderma maydis (Braunfleckigkeit) an Mais; Phytophthora spp. (Welke, Wurzel-, Blatt-, Stängel- und Fruchtfäule) an verschiedenen Pflanzen, wie an Paprika und Gurkengewächsen (z. B. P. capsici), Sojabohnen (z. B. P. megasperma, Syn. P. sojae), Kartoffeln und Tomaten (z. B. P. infestans: Kraut- und Braunfäule) und Laubgehölzen (z. B. P. ramorum: Plötzliches Eichensterben); Plasmodiophora brassicae (Kohlhernie) an Kohl, Raps, Rettich und anderen Pflanzen; Plasmopara spp., z. B. P. viticola (Reben-Peronospora, Falscher Mehltau) an Weinreben und P. halstedii an Sonnenblumen; Podosphaera spp. (Echter Mehltau) an Rosaceen, Hopfen, Kern- und Beerenobst, z. B. P. leucotricha an Apfel; Polymyxa spp., z. B. an Getreide, wie Gerste und Weizen (P. graminis) und Zuckerrüben (P. betae) und die dadurch übertragenen Viruserkrankungen; Pseudocercosporella herpotrichoides (Halmbruch, Teleomorph: Tapesia yallundae) an Getreide, z. B. Weizen oder Gerste; Pseudoperonospora (Falscher Mehltau) an verschiedenen Pflanzen, z. B. P. cubensis an Gurkengewächsen oder P. humili an Hopfen; Pseudopezicula tracheiphila (Roter Brenner, Anamorph: Phialophora) an Weinrebe; Puccinia spp. (Rostkrankheit) an verschiedenen Pflanzen, z. B. P. triticina (Weizenbraunrost), P. striiformis (Gelbrost), P. hordei (Zwergrost), P. graminis (Schwarzrost) oder P. recondita (Roggenbraunrost) an Getreide, wie z. B. Weizen, Gerste oder Roggen, und an Spargel (z. B. P. asparagi); Pyrenophora (Anamorph: Drechslera) tritici-repentis (Blattdürre) an Weizen oder P. teres (Netzflecken) an Gerste; Pyricularia spp., z. B. P. oryzae (Teleomorph: Magnaporthe grisea, Reis-Blattbrand) an Reis und P. grisea an Rasen und Getreide; Pythium spp. (Umfallkrankheit) an Rasen, Reis, Mais, Weizen, Baumwolle, Raps, Sonnenblumen, Zuckerrüben, Gemüse und anderen Pflanzen (z. B. P. ultimum oder P. aphanidermatum); Ramularia spp., z. B. R. collo-cygni (Sprenkelkrankheit/Sonnenbrand-Komplex/Physiological leaf spots) an Gerste und R. beticola an Zuckerrüben; Rhizoctonia spp. an Baumwolle, Reis, Kartoffeln, Rasen, Mais, Raps, Kartoffeln, Zuckerrüben, Gemüse und an verschiedenen weiteren Pflanzen, z. B. R. solani (Wurzel-/Stängelfäule) an Sojabohnen, R. solani (Blattscheidenbrand) an Reis oder R. cerealis (Spitzer Augenfleck) an Weizen oder Gerste; Rhizopus stolonifer (Weichfäule) an Erdbeeren, Karotten, Kohl, Weinrebe und Tomate; Rhynchosporium secalis (Blattflecken) an Gerste, Roggen und Triticale; Sarocladium oryzae und S. attenuatum (Blattscheidenfäule) an Reis; Sclerotinia spp. (Stängel- oder Weißfäule) an Gemüse- und Ackerbaukulturen, wie Raps, Sonnenblumen (z. B. Sclerotinia sclerotiorum) und Sojabohnen (z. B. S. rolfsii); Septoria spp. an verschiedenen Pflanzen, z. B. S. glycines (Blattflecken) an Sojabohnen, S. tritici (Septoria-Blattdürre) an Weizen und S. (Syn. Stagonospora) nodorum (Blatt- und Spelzbräune) an Getreide; Uncinula (Syn. Erysiphe) necator (Echter Mehltau, Anamorph: Oidium tuckeri) an Weinrebe; Setospaeria spp. (Blattflecken) an Mais (z. B. S. turcicum, Syn. Helminthosporium turcicum) und Rasen; Sphacelotheca spp. (Staubbrand) an Mais, (z. B. S. reiliana: Kolbenbrand), Hirse und Zuckerrohr; Sphaerotheca fuliginea (Echter Mehltau) an Gurkengewächsen; Spongospora subterranea (Pulverschorf) an Kartoffeln und die dadurch übertragenen Viruserkrankungen; Stagonospora spp. an Getreide, z. B. S. nodorum (Blatt- und Spelzbräune, Teleomorph: Leptosphaeria [Syn. Phaeosphaeria] nodorum) an Weizen; Synchytrium endobioticum an Kartoffeln (Kartoffelkrebs); Taphrina spp., z. B. T. deformans (Kräuselkrankheit) an Pfirsich und T. pruni (Taschenkrankheit) an Pflaumen; Thielaviopsis spp. (Schwarze Wurzelfäule) an Tabak, Kernobst, Gemüsekulturen, Sojabohnen und Baumwolle, z. B. T. basicola (Syn. Chalara elegans); Tilletia spp. (Stein- oder Stinkbrand) an Getreide, wie z. B. T. tritici (Syn. T. caries, Weizensteinbrand) und T. controversa (Zwergsteinbrand) an Weizen; Typhula incarnata (Schneefäule) an Gerste oder Weizen; Urocystis spp., z. B. U. occulta (Stängelbrand) an Roggen; Uromyces spp. (Rost) an Gemüsepflanzen, wie Bohnen (z. B. U. appendiculatus, Syn. U. phaseoli) und Zukkerrüben (z. B. U. betae); Ustilago spp. (Flugbrand) an Getreide (z. B. U. nuda und U. avaenae), Mais (z. B. U. maydis: Maisbeulenbrand) und Zuckerrohr; Venturia spp. (Schorf) an Äpfeln (z. B. V. inaequalis) und Birnen; und Verticillium spp. (Laub- und Triebwelke) an verschiedenen Pflanzen, wie Obst- und Ziergehölzen, Weinreben, Beerenobst, Gemüse- und Ackerbaukulturen, wie z. B. V. dahliae an Erdbeeren, Raps, Kartoffeln und Tomaten.

Die Mischungen der Verbindung der Formel I und der Verbindung der Formel II und die erfindungsgemäßen Zusammensetzungen eignen sich außerdem zur Bekämpfung von Schadpilzen im Material- und Bautenschutz (z. B. Holz, Papier, Dispersionen für den Anstrich, Fasern bzw. Gewebe) und im Vorratsschutz. Im Holz- und Bautenschutz finden insbesondere folgende Schadpilze Beachtung: Ascomyceten wie Ophiostoma spp., Ceratocystis spp., Aureobasidium pullulans, Sclerophoma spp., Chaetomium spp., Humicola spp., Petriella spp., Trichurus spp.; Basidiomyceten wie Coniophora spp., Coriolus spp., Gloeophyllum spp., Lentinus spp., Pleurotus spp., Poria spp., Serpula spp. und Tyromyces spp., Deuteromyceten wie Aspergillus spp., Cladosporium spp., Penicillium spp., Trichoderma spp., Alternaria spp., Paecilomyces spp. und Zygomyceten wie Mucor spp., darüber hinaus im Materialschutz folgende Hefepilze: Candida spp. und Saccharomyces cerevisae.

Die Verbindung der Formel I und die Verbindung der Formel II können in verschiedenen Kristallmodifikationen vorliegen, deren biologische Aktivität unterschiedlich sein kann. Diese sind in den Umfang der vorliegenden Erfindung eingeschlossen.

Die Mischungen der Verbindung der Formel I und der Verbindung der Formel II werden als solche oder in Form einer Zusammensetzung angewendet, indem man die Schadpilze, deren Lebensraum oder die vor Pilzbefall zu schützenden Pflanzen, pflanzlichen Vermehrungsmaterialien, z. B. Saatgüter, den Erdboden, Flächen, Materialien oder Räume mit einer fungizid wirksamen Menge der Verbindungen I behandelt. Die Anwendung kann sowohl vor als auch nach der Infektion der Pflanzen, pflanzlichen Vermehrungsmaterialien, z. B. Saatgüter, des Erdboden, der Flächen, Materialien oder Räume durch die Pilze erfolgen.

Pflanzliche Vermehrungsmaterialien können vorbeugend zusammen mit oder bereits vor der Aussaat bzw. zusammen mit oder bereits vor dem Umpflanzen mit den Mischungen der Verbindung der Formel I und der Verbindung der Formel II als solche oder mit einer Zusammensetzung von Mischungen der Verbindung der Formel I und der Verbindung der Formel II behandelt werden.

Außerdem betrifft die Erfindung agrochemische Zusammensetzungen, enthaltend ein Lösungsmittel oder flüssigen Trägerstoff und mindestens eine Mischung der Verbindung der Formel I und der Verbindung der Formel II sowie ihre Verwendung zur Bekämpfung von Schadpilzen.

Eine agrochemische Zusammensetzung enthält eine fungizid wirksame Menge einer Mischung der Verbindung der Formel I und der Verbindung der Formel II. Der Ausdruck "wirksame Menge" bedeutet eine Menge der agrochemischen Zusammensetzung bzw. der Mischungen der Verbindung der Formel I und der Verbindung der Formel II, die zur Bekämpfung von Schadpilzen an Kulturpflanzen oder im Material- und Bautenschutz ausreichend ist und nicht zu einem beträchtlichen Schaden an den behandelten Kulturpflanzen führt. Eine derartige Menge kann innerhalb eines breiten Bereichs variieren und wird von zahlreichen Faktoren, wie z. B. dem zu bekämpfenden Schadpilz, der jeweiligen behandelten Kulturpflanze oder Materialien, den klimatischen Bedingungen und Verbindungen, beeinflusst.

Die Mischungen der Verbindung der Formel I und der Verbindung der Formel II und ihre Salze können in die für agrochemische Zusammensetzungen üblichen Typen überführt werden, z. B. Lösungen, Emulsionen, Suspensionen, Stäube, Pulver, Pasten und Granulate. Der Zusammensetzungstyp richtet sich nach dem jeweiligen Verwendungszweck; sie soll in jedem Fall eine feine und gleichmäßige Verteilung der erfindungsgemäßen Verbindung gewährleisten.

Beispiele für Zusammensetzungstypen sind sind hier Suspensionen (SC, OD, FS), Pasten, Pastillen, benetzbare Pulver oder Stäube (WP, SP, SS, WS, DP, DS) oder Granulate (GR, FG, GG, MG), die entweder in Wasser löslich (soluble) oder dispergierbar (wettable) sein können sowie Gele für die Behandlung pflanzlicher Vermehrungsmaterialien wie Saatgut (GF).

Im Allgemeinen werden die Zusammensetzungstypen (z. B. SC, OD, FS, WG, SG, WP, SP, SS, WS, GF) verdünnt eingesetzt. Zusammensetzungstypen wie DP, DS, GR, FG, GG und MG werden in der Regel unverdünnt eingesetzt.

Die agrochemischen Zusammensetzungen werden in bekannter Weise hergestellt (s. z. B. US 3,060,084, EP-A 707 445 (für flüssige Konzentrate), Browning, "Agglomeration", Chemical Engineering, Dec. 4, 1967, 147-48, Perry's Chemical Engineer's Handbook, 4. Aufl., McGraw-Hill, New York, 1963, 8-57 und ff., WO 91/13546, US 4,172,714, US 4,144,050, US 3,920,442, US 5,180,587, US 5,232,701, US 5,208,030, GB 2,095,558, US 3,299,566, Klingman: Weed Control as a Science (John Wiley & Sons, New York, 1961), Hance et al.: Weed Control Handbook (8th Ed., Blackwell Scientific Publications, Oxford, 1989) und Mollet, H. und Grubemann, A.: Formulation technology (Wiley VCH Verlag, Weinheim, 2001).

Die agrochemischen Zusammensetzungen können weiterhin auch für Pflanzenschutzmittel übliche Hilfsmittel enthalten, wobei sich die Wahl der Hilfsmittel nach der konkreten Anwendungsform bzw. dem Wirkstoff richtet.

Beispiele für geeignete Hilfsmittel sind Lösungsmittel, feste Trägerstoffe, oberflächenaktive Stoffe (wie weitere Solubilisatoren, Schutzkolloide, Netzmittel und Haftmittel), organische und anorganische Verdicker, Bakterizide, Frostschutzmittel, Entschäumer, ggf. Farbstoffe und Kleber (z. B. für Saatgutbehandlung).

Als Lösungsmittel kommen Wasser, organische Lösungsmittel wie Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Gykole, Ketone wie Cyclohexanon, gamma-Butyrolacton, Dimethylfettsäureamide, Fettsäuren und Fettsäureester und stark polare Lösungsmittel, z.B. Amine wie N-Methylpyrrolidon, in Betracht. Grundsätzlich können auch Lösungsmittelgemische verwendet werden sowie Gemische aus den vorstehend genannten Lösungsmitteln und Wasser.

Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Als oberflächenaktive Stoffe (Adjuvantien, Netz-, Haft-, Dispergier- oder Emulgiermittel) kommen die Alkali-, Erdalkali-, Ammoniumsalze von aromatischen Sulfonsäuren, z. B. von Lignin-(Borresperse®-Typen, Borregaard, Norwegen), Phenol-, Naphthalin-(Morwet®-Typen, Akzo Nobel, USA) und Dibutylnaphthalinsulfonsäure (Nekal®-Typen, BASF, Deutschland), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol®-Typen, Clariant, Schweiz), Polycarboxylate (Sokalan®-Typen, BASF, Deutschland), Polyalkoxylate, Polyvinylamin (Lupamin®-Typen, BASF, Deutschland), Polyethylenimin (Lupasol®-Typen, BASF, Deutschland), Polyvinylpyrrolidon und deren Copolymere in Betracht.

Beispiele für Verdicker (d. h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan®, CP Kelco, USA), Rhodopol® 23 (Rhodia, Frankreich) oder Veegum® (R.T. Vanderbilt, USA) oder Attaclay® (Engelhard Corp., NJ, USA).

Bakterizide können zur Stabilisierung der Zusammensetzung zugesetzt werden. Beispiele für Bakterizide sind solche basierend auf Diclorophen und Benzylalkoholhemiformal (Proxel® der Fa. ICI oder Acticide® RS der Fa. Thor Chemie und Kathon® MK der Fa. Rohm & Haas) sowie Isothiazolinonderivaten wie Alkylisothiazolinonen und Benzisothiazolinonen (Acticide® MBS der Fa. Thor Chemie).

Beispiele für geeignete Frostschutzmittel sind Ethylenglycol, Propylenglycol, Harnstoff und Glycerin.

Beispiele für Entschäumer sind Silikonemulsionen (wie z. B. Silikon® SRE, Wacker, Deutschland oder Rhodorsil®, Rhodia, Frankreich), langkettige Alkohole, Fettsäuren, Salze von Fettsäuren, fluororganische Verbindungen und deren Gemische.

Beispiele für Farbmittel sind sowohl in Wasser wenig lösliche Pigmente als auch in Wasser lösliche Farbstoffe. Als Beispiele genannt seien die unter den Bezeichnungen Rhodamin B, C. I. Pigment Red 112 und C. I. Solvent Red 1, Pigment blue 15:4, Pigment blue 15:3, Pigment blue 15:2, Pigment blue 15:1, Pigment blue 80, Pigment yellow 1, Pigment yellow 13, Pigment red 48:2, Pigment red 48:1, Pigment red 57:1, Pigment red 53:1, Pigment orange 43,

Pigment orange 34, Pigment orange 5, Pigment green 36, Pigment green 7, Pigment white 6, Pigment brown 25, Basic violet 10, Basic violet 49, Acid red 51, Acid red 52, Acid red 14, Acid blue 9, Acid yellow 23, Basic red 10, Basic red 108 bekannten Farbstoffe und Pigmente.

Beispiele für Kleber sind Polyvinylpyrrolidon, Polyvinylacetat, Polyvinylalkohol und Celluloseether (Tylose®, Shin-Etsu, Japan).

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubemittel können durch Mischen oder gemeinsames Vermahlen der Verbindungen I sowie, soweit vorhanden, weiteren Wirkstoffen mit mindestens einem festen Trägerstoff hergestellt werden.

Granulate, z. B. Umhüllungs-, Imprägnierungs- und Homogengranulate, können durch Bindung der Wirkstoffe an mindestens einen festen Trägerstoff hergestellt werden. Feste Trägerstoffe sind z. B. Mineralerden, wie Kieselgele, Silikate, Talkum, Kaolin, Attaclay, Kalkstein, Kalk, Kreide, Bolus, Löß, Ton, Dolomit, Diatomeenerde, Calzium- und Magnesiumsulfat, Magnesiumoxid, gemahlene Kunststoffe, Düngemittel wie Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Beispiele für Zusammensetzungstypen sind:

1. Zusammensetzungstypen zur Verdünnung in Wasser

i) Wasserlösliche Konzentrate (SL, LS)
10 Gew.-Teile der Wirkstoffe werden mit 90 Gew.-Teilen Wasser oder einem wasserlöslichen Lösungsmittel gelöst. Alternativ werden Netzmittel oder andere Hilfsmittel zugefügt. Bei der Verdünnung in Wasser löst sich der Wirkstoff. Man erhält auf diese Weise eine Zusammensetzung mit 10 Gew.-% Wirkstoffgehalt.
ii) Dispergierbare Konzentrate (DC)
20 Gew.-Teile der Wirkstoffe werden in 70 Gew.-Teilen Cyclohexanon unter Zusatz von 10 Gew.-Teilen eines Dispergiermittels z. B. Polyvinylpyrrolidon gelöst. Bei Verdünnung in Wasser ergibt sich eine Dispersion. Der Wirkstoffgehalt beträgt 20 Gew.-%
iii) Emulgierbare Konzentrate (EC)
15 Gew.-Teile der Wirkstoffe werden in 75 Gew.-Teilen Xylol unter Zusatz von Ca-Dodecylbenzolsulfonat und Ricinusölethoxylat (jeweils 5 Gew.-Teile) gelöst. Bei der Verdünnung in Wasser ergibt sich eine Emulsion. Die Zusammensetzung hat 15 Gew.-% Wirkstoffgehalt.
iv) Emulsionen (EW, EO, ES)
25 Gew.-Teile der Wirkstoffe werden in 35 Gew.-Teile Xylol unter Zusatz von Ca-Dodecylbenzolsulfonat und Ricinusölethoxylat (jeweils 5 Gew.-Teile) gelöst. Diese Mischung wird mittels einer Emulgiermaschine (z. B. Ultra-Turrax) in 30 Gew.-Teile Wasser gegeben und zu einer homogenen Emulsion gebracht. Bei der Verdünnung in Wasser ergibt sich eine Emulsion. Die Zusammensetzung hat einen Wirkstoffgehalt von 25 Gew.-%.
v) Suspensionen (SC, OD, FS)
20 Gew.-Teile der Wirkstoffe werden unter Zusatz von 10 Gew.-Teilen Dispergier- und Netzmitteln und 70 Gew.-Teilen Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs. Der Wirkstoffgehalt in der Zusammensetzung beträgt 20 Gew.-%.
vi) Wasserdispergierbare und wasserlösliche Granulate (WG, SG)
50 Gew.-Teile der Wirkstoffe werden unter Zusatz von 50 Gew.-Teilen Dispergier- und Netzmitteln fein gemahlen und mittels technischer Geräte (z. B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs. Die Zusammensetzung hat einen Wirkstoffgehalt von 50 Gew.-%.
vii) Wasserdispergierbare und wasserlösliche Pulver (WP, SP, SS, WS)
75 Gew.-Teile der Wirkstoffe werden unter Zusatz von 25 Gew.-Teilen Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs. Der Wirkstoffgehalt der Zusammensetzung beträgt 75 Gew.-%.
viii) Gele (GF)

In einer Kugelmühle werden 20 Gew.-Teile der Wirkstoffe, 10 Gew.-Teile Dispergiermittel, 1 Gew.-Teil Quellmittel ("gelling agent") und 70 Gew.-Teile Wasser oder eines organischen Lösungsmittels zu einer feinen Suspension

vermahlen. Bei der Verdünnung mit Wasser ergibt sich eine stabile Suspension mit 20 Gew.-% Wirkstoffgehalt.

2. Zusammensetzungstypen für die Direktapplikation

ix) Stäube (DP, DS)

5 Gew.-Teile der Wirkstoffe werden fein gemahlen und mit 95 Gew.-Teilen feinteiligem Kaolin innig vermischt. Man erhält dadurch ein Stäubemittel mit 5 Gew.-% Wirkstoffgehalt.

x)Granulate (GR, FG, GG, MG)

0,5 Gew.-Teile der Wirkstoffe werden fein gemahlen und mit 99,5 Gewichtsteilen Trägerstoffe verbunden. Gängige Verfahren sind dabei die Extrusion, die Sprühtrocknung oder die Wirbelschicht. Man erhält dadurch ein Granulat für die Direktapplikation mit 0,5 Gew.-% Wirkstoffgehalt.

xi) ULV- Lösungen (UL)

10 Gew.-Teile der Wirkstoffe werden in 90 Gew.-Teilen eines organischen Lösungsmittel z. B. Xylol gelöst. Dadurch erhält man eine Zusammensetzung für die Direktapplikation mit 10 Gew.-% Wirkstoffgehalt.

Die Zusammensetzungen der erfindungsgemäßen Verbindungen enthalten im allgemeinen 0,01 bis 95 Gew.-%, vorzugsweise 0,1 bis 90 Gew.-% der Verbindungen I und II. Die Verbindungen werden dabei bevorzugt in einer Reinheit von 90% bis 100%, vorzugsweise 95% bis 100% eingesetzt.

Für die Behandlung pflanzlicher Vermehrungsmaterialien, insbesondere Saatgut, werden üblicherweise wasserlösliche Konzentrate (LS), Suspensionen (FS), Stäube (DS), wasserdispergierbare und wasserlösliche Pulver (WS, SS), Emulsionen (ES), emulgierbare Konzentrate (EC) und Gele (GF) verwendet. Diese Zusammensetzungen können auf die Vermehrungsmaterialien, insbesondere Saatgut, unverdünnt oder, bevorzugt, verdünnt angewendet werden. Hierbei kann die entsprechende Zusammensetzung 2 bis 10fach verdünnt werden, so dass in den für die Beize zu verwendeten Zusammensetzungen 0,01 to 60% Gew.-%, vorzugsweise 0,1 to 40% Gew.-% Wirkstoff vorhanden sind. Die Anwendung kann vor der Aussaat erfolgen. Die Behandlung von pflanzlichem Vermehrungsmaterial, insbesondere die Behandlung von Saatgut, sind dem Fachmann bekannt, und erfolgen durch Bestäuben, Beschichten, Pelletieren, Eintauchen oder Tränken des pflanzlichen Vermehrungsmaterial, wobei die Behandlung bevorzugt durch Pelletieren, Beschichten und Bestäuben erfolgt, so dass z. B. eine vorzeitige Keimung des Saatguts verhindert wird.

Für die Saatgutbehandlung werden bevorzugt Suspensionen verwendet. Üblicherweise enthalten solche Zusammensetzungen 1 bis 800 g/l Wirkstoff, 1 bis 200 g/l Tenside; 0 bis 200 g/l Frostschutzmittel, 0 bis 400 g/l Bindemittel, 0 bis 200 g/l Farbstoffe und Lösungsmittel, vorzugsweise Wasser.

Die Verbindungen können als solche oder in Form ihrer Zusammensetzungen, z. B. in Form von direkt versprühbaren Lösungen, Pulvern, Suspensionen, Dispersionen, Emulsionen, Öldispersionen, Pasten, Stäubemitteln, Streumitteln oder Granulaten durch Versprühen, Vernebeln, Verstäuben, Verstreuen, Einstreichen, Eintauchen oder Gießen angewendet werden. Die Zusammensetzungstypen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im Allgemeinen liegen sie zwischen 0,0001 und 10%, vorzugsweise zwischen 0,01 und 1%.

Die Wirkstoffe können auch mit Erfolg im Ultra-Low-Volume-Verfahren (ULV) verwendet werden, wobei es möglich ist, Zusammensetzungen mit mehr als 95 Gew.-% Wirkstoff oder sogar den Wirkstoff ohne Zusätze auszubringen.

Die Aufwandmengen liegen bei der Anwendung im Pflanzenschutz je nach Art des gewünschten Effektes zwischen 0,01 und 2,0 kg Wirkstoff pro ha.

Bei der Behandlung von pflanzlichen Vermehrungsmaterialien, z. B. Staatgut, werden im allgemeinen Wirkstoffmengen von 1 bis 1000 g/100 kg, vorzugsweise 5 bis 100 g/100 kg Vermehrungsmaterial bzw. Saatgut verwendet.

Bei der Anwendung im Material- bzw. Vorratsschutz richtet sich die Aufwandmenge an Wirkstoff nach der Art des Einsatzgebietes und des gewünschten Effekts. Übliche Aufwandmengen sind im Materialschutz beispielsweise 0,001 g bis 2 kg, vorzugsweise 0,005 g bis 1 kg Wirkstoff pro Kubikmeter behandelten Materials.

Zu den Wirkstoffen oder den diese enthaltenden Zusammensetzungen können Öle verschiedenen Typs, Netzmittel, Adjuvants, Herbizide, Bakterizide, andere Fungizide und/oder Schädlingsbekämpfungsmittel, gegebenenfalls auch erst unmittelbar vor der Anwendung (Tankmix), zugesetzt werden. Diese Mittel können zu den erfindungsgemäßen Zusammensetzungen im Gewichtsverhältnis 1:100 bis 100:1, bevorzugt 1:10 bis 10:1 zugemischt werden.

Als Adjuvants in diesem Sinne kommen insbesondere in Frage: organisch modifizierte Polysiloxane, z. B. Break Thru S 240®; Alkoholalkoxylate, z. B. Atplus® 245, Atplus® MBA 1303, Plurafac® LF 300 und Lutensol® ON 30; EO-PO-Blockpolymerisate, z. B. Pluronic® RPE 2035 und Genapol® B; Alkoholethoxylate, z. B. Lutensol® XP 80; und Natriumdioctylsulfosuccinat, z. B. Leophen® RA.

Die erfindungsgemäßen Zusammensetzungen können in der Anwendungsform als Fungizide auch zusammen mit anderen Wirkstoffen vorliegen, z. B. mit Herbiziden, Insektiziden, Wachstumsregulatoren, Fungiziden oder auch mit Düngemitteln, als Prä-Mix oder gegebenenfalls auch erst unmittelbar vor der Anwendung (Tankmix).

Beim Vermischen der Mischungen der Verbindung der Formel I und der Verbindung der Formel II bzw. der sie enthaltenden Zusammensetzungen mit einem oder mehreren weiteren Wirkstoffen, insbesondere Fungiziden, kann beispielsweise in vielen Fällen das Wirkungsspektrum verbreitert werden oder Resistenzentwicklungen vorgebeugt werden. In vielen Fällen erhält man dabei synergistische Effekte.

Die folgende Liste von Wirkstoffen, mit denen die erfindungsgemäßen Verbindungen gemeinsam angewendet werden können, soll die Kombinationsmöglichkeiten erläutern, nicht aber einschränken:

A) Strobilurine:

Azoxystrobin, Dimoxystrobin, Enestroburin, Fluoxastrobin, Kresoxim-methyl, Metominostrobin, Orysastrobin, Picoxystrobin, Pyraclostrobin, Pyribencarb, Trifloxystrobin, 2-(2-(6-(3-Chlor-2-methyl-phenoxy)-5-fluor-pyrimidin-4-yloxy)-phenyl)-2-methoxy-imino-N-methyl-acetamid, 2-(ortho-((2,5-Dimethylphenyl-oxymethylen)phenyl)-3-methoxy-acrylsäuremethylester, 3-Methoxy-2-(2-(N-(4-methoxy-phenyl)-cyclopropanecarboximidoylsulfanylmethyl)-phenyl)-acrylic acid methyl ester, 2-(2-(3-(2,6-dichlorphenyl)-1-methyl-allylideneaminooxymethyl)-phenyl)-2-methoxyimino-N-methyl-acetamide;

B) Carbonsäureamide:

- Carbonsäureanilide: Benalaxyl, Benalaxyl-M, Benodanil, Bixafen, Boscalid, Carboxin, Fenfuram, Fenhexamid, Flutolanil, Furametpyr, Isopyrazam, Isotianil, Kiralaxyl, Mepronil, Metalaxyl, Metalaxyl-M (Mefenoxam), Ofurace, Oxadixyl, Oxycarboxin, Penthiopyrad, Tecloftalam, Thifluzamide, Tiadinil, 2-Amino-4-methyl-thiazol-5-carboxanilid, 2-Chlor-N-(1,1,3-trimethyl-indan-4-yl)nicotinamid, N-(2',4'-Difluorbiphenyl-2-yl)-3-difluormethyl-1-methyl-1H-pyrazol-4-carboxamid, N-(2',4'-Dichlorbiphenyl-2-yl)-3-difluormethyl-1-methyl-1H-pyrazol-4-carboxamid, N-(2',5'-Difluorbiphenyl-2-yl)-3-difluormethyl-1-methyl-1H-pyrazol-4-carboxamid, N-(2',5'-Dichlorbiphenyl-2-yl)-3-difluormethyl-1-methyl-1H-pyrazole-4-carboxamid, N-(3',5'-Difluorbiphenyl-2-yl)-3-difluormethyl-1-methyl-1H-pyrazol-4-carboxamid, N-(3',5'-Dichlorbiphenyl-2-yl)-3-difluormethyl-1-methyl-1H-pyrazol-4-carboxamid, N-(3'-Fluorbiphenyl-2-yl)-3-difluormethyl-1-methyl-1H-pyrazol-4-carboxamid, N-(3'-Chlorbiphenyl-2-yl)-3-difluormethyl-1-methyl-1H-pyrazol-4-carboxamid, N-(2'-Fluorbiphenyl-2-yl)-3-difluormethyl-1-methyl-1H-pyrazol-4-carboxamid, N-(2'-Chlorbiphenyl-2-yl)-3-difluormethyl-1-methyl-1H-pyrazol-4-carboxamid, N-(3',4',5'-Trifluorbiphenyl-2-yl)-3-difluormethyl-1-methyl-1H-pyrazol-4-carboxamid, N-(2',4',5'-Trifluorbiphenyl-2-yl)-3-difluormethyl-1-methyl-1H-pyrazol-4-carboxamid, N-[2-(1,1,2,3,3,3-Hexafluorpropoxy)-phenyl]-3-difluormethyl-1-methyl-1H-pyrazol-4-carboxamid, N-[2-(1,1,2,2-Tetrafluoroethoxy)-phenyl]-3-difluormethyl-1-methyl-1H-pyrazol-4-carboxamid, N-(4'-Trifluormethylthiobiphenyl-2-yl)-3-difluormethyl-1-methyl-1H-pyrazol-4-carboxamid, N-(2-(1,3-Dimethyl-butyl)-phenyl)-1,3-dimethyl-5-fluor-1H-pyrazol-4-carboxamid, N-(2-(1,3,3-Trimethyl-butyl)-phenyl)-1,3-dimethyl-5-fluor-1H-pyrazol-4-carboxamid, N-(4'-Chlor-3',5'-difluorbiphenyl-2-yl)-3-difluormethyl-1-methyl-1H-pyrazol-4-carboxamid, N-(4'-Chlor-3',5'-difluorbiphenyl-2-yl)-3-trifluormethyl-1-methyl-1H-pyrazol-4-carboxamid, N-(3',4'-Dichlor-5'-fluorbiphenyl-2-yl)-3-trifluormethyl-1-methyl-1H-pyrazol-4-carboxamid, N-(3',5'-Difluor-4'-methyl-biphenyl-2-yl)-3-difluormethyl-1-methyl-1H-pyrazol-4-carboxamid, N-(3',5'-Difluor-4'-methyl-biphenyl-2-yl)-3-trifluormethyl-1-methyl-1H-pyrazol-4-carboxamid, N-(2-Bicyclopropyl-2-yl-phenyl)-3-difluormethyl-1-methyl-1H-pyrazol-4-carboxamid, N-(cis-2-Bicyclopropyl-2-yl-phenyl)-3-difluormethyl-1-methyl-1H-pyrazol-4-carboxamid, N-(trans-2-Bicyclopropyl-2-yl-phenyl)-3-difluormethyl-1-methyl-1H-pyrazol-4-carboxamid, N-[1,2,3,4-Tetrahydro-9-(1-methylethyl)-1,4-methanonaphthalen-5-yl]-3-(difluormethyl)-1-methyl-1H-pyrazol-4-carboxamid;
- Carbonsäuremorpholide: Dimethomorph, Flumorph;
- Benzoesäureamide: Flumetover, Fluopicolide, Fluopyram, Zoxamid, N-(3-Ethyl-3,5,5-trimethyl-cyclohexyl)-3-formylamino-2-hydroxy-benzamid;
- Sonstige Carbonsäureamide: Carpropamid, Diclocymet, Mandipropamid, Oxytetracyclin, Silthiofam, N-(6-methoxy-pyridin-3-yl)cyclopropancarbonsäureamid;

C) Azole:

- Triazole: Azaconazol, Bitertanol, Bromuconazol, Cyproconazol, Difenoconazol, Diniconazol, Diniconazol-M, Epoxiconazol, Fenbuconazol, Fluquinconazol, Flusilazol, Flutriafol, Hexaconazol, Imibenconazol, Ipconazol, Metconazol, Myclobutanil, Oxpoconazol, Paclobutrazol, Penconazol, Propiconazol, Prothioconazol, Simeconazol, Tebuconazol, Tetraconazol, Triadimefon, Triadimenol, Triticonazol, Uniconazol, 1-(4-Chlor-phenyl)-2-([1,2,4]triazol-1-yl)-cycloheptanol;
- Imidazole: Cyazofamid, Imazalil, Imazalilsulfat, Pefurazoat, Prochloraz, Triflumizol;
- Benzimidazole: Benomyl, Carbendazim, Fuberidazole, Thiabendazol;
- Sonstige: Ethaboxam, Etridiazol, Hymexazol, 2-(4-Chlor-phenyl)-N-[4-(3,4-dimethoxy-phenyl)-isoxazol-5-yl]-2-prop-2-inyloxy-acetamid;

D) Stickstoffhaltige Heterocyclylverbindungen

- Pyridine: Fluazinam, Pyrifenox, 3-[5-(4-Chlor-phenyl)-2,3-dimethyl-isoxazolidin-3-yl]-pyridin, 3-[5-(4-Methyl-phenyl)-2,3-dimethyl-isoxazolidin-3-yl]-pyridin, 2,3,5,6-Tetrachlor-4-methansulfonylpyridin, 3,4,5-Trichlor-pyridin-2,6-dicarbonitril, N-(1-(5-Brom-3-chlor-pyridin-2-yl)-ethyl)-2,4-dichlornicotinamid, N-((5-Brom-3-chlor-pyridin-2-yl)-methyl)-2,4-dichlornicotinamid;
- Pyrimidine: Bupirimat, Cyprodinil, Diflumetorim, Fenarimol, Ferimzone, Mepanipyrim, Nitrapyrin, Nuarimol, Pyrimethanil;
- Piperazine: Triforine;
- Pyrrole: Fludioxonil, Fenpiclonil;
- Morpholine: Aldimorph, Dodemorph, Dodemorphacetat, Fenpropimorph, Tridemorph;
- Piperidine: Fenpropidin;
- Dicarboximide: Fluorimid, Iprodione, Procymidone, Vinclozolin;
- nichtaromatische 5-Ring-Heterocyclen: Famoxadon, Fenamidon, Octhilinon, Probenazol, 5-Amino-2-isopropyl-3-oxo-4-ortho-tolyl-2,3-dihydropyrazol-1-thiocarbonsäure-S-allylester;
- sonstige: Acibenzolar-S-methyl, Amisulbrom, Anilazin, Blasticidin-S, Captafol, Captan, Chinomethionat, Dazomet, Debacarb, Diclomezine, Difenzoquat, Difenzoquatmethylsulfat, Fenoxanil, Folpet, Oxolinsäure, Piperalin, Proquinazid, Pyroquilon, Quinoxyfen, Triazoxid, Tricyclazol, 2-Butoxy-6-jod-3-propyl-chromen-4-on, 5-Chlor-1-(4,6-dimethoxy-pyrimidin-2-yl)-2-methyl-1H-benzoimidazol, 5-Chlor-7-(4-methylpiperidin-1-yl)-6-(2,4,6-trifluor-phenyl)-[1,2,4]triazolo[1,5-a]pyrimidin, 6-(3,4-Dichlorphenyl)-5-methyl-[1,2,4]triazolo[1,5-a]pyrimidin-7-ylamin, 6-(4-tert-Butylphenyl)-5-methyl-[1,2,4]triazolo[1,5-a]pyrimidin-7-ylamin, 5-Methyl-6-(3,5,5-trimethyl-hexyl)-[1,2,4]triazolo[1,5-a]pyrimidin-7-ylamin, 5-Methyl-6-octyl-[1,2,4]triazolo[1,5-a]pyrimidin-7-ylamin, 6-Methyl-5-octyl-[1,2,4]triazolo[1,5-a]pyrimidin-7-ylamin, 6-Ethyl-5-octyl-[1,2,4]triazolo[1,5-a]pyrimidin-7-ylamin, 5-Ethyl-6-octyl-[1,2,4]triazolo-[1,5-a]pyrimidin-7-ylamin, 5-Ethyl-6-(3,5,5-trimethyl-hexyl)-[1,2,4]triazolo[1,5-a]pyrimidin-7-ylamin, 6-0ctyl-5-propyl-[1,2,4]triazolo[1,5-a]pyrimidin-7-ylamin, 5-Methoxymethyl-6-octyl-[1,2,4]triazolo[1,5-a]pyrimidin-7-ylamin, 6-Octyl-5-trifluormethyl-[1,2,4]triazolo[1,5-a]pyrimidin-7-ylamin und 5-Trifluormethyl-6-(3,5,5-trimethyl-hexyl)-[1,2,4]triazolo[1,5-a]pyrimidin-7-ylamin;

E) Carbamate und Dithiocarbamate

- Thio- und Dithiocarbamate: Ferbam, Mancozeb, Maneb, Metam, Methasulphocarb, Metiram, Propineb, Thiram, Zineb, Ziram;
- Carbamate: Diethofencarb, Benthiavalicarb, Iprovalicarb, Propamocarb, Propamocarb-hydrochlorid, Valiphenal, N-(1-(1-(4-Cyanophenyl)ethansulfonyl)-but-2-yl)carbaminsäure-(4-fluorphenyl)ester;

F) Sonstige Fungizide

- Guanidine: Dodine, Dodine freie Base, Guazatin, Guazatinacetat, Iminoctadin, Iminoctadin-triacetat, Iminoctadin-tris(albesilat);
- Antibiotika: Kasugamycin, Kasugamycinhydrochlorid-Hydrat, Polyoxine, Streptomycin, Validamycin A;
- Nitrophenylderivate:

Binapacryl, Dicloran, Dinobuton, Dinocap, Nitrothal-isopropyl, Tecnazen;

- Organometallverbindungen: Fentin-Salze wie beispielsweise Fentin-acetat, Fentinchlorid, Fentin-hydroxid;
- Schwefelhaltige Heterocyclylverbindungen: Dithianon, Isoprothiolane;
- Organophosphorverbindungen: Edifenphos, Fosetyl, Fosetyl-Aluminium, Iprobenfos, Phosphorige Säure und ihre Salze, Pyrazophos, Tolclofos-methyl;
- Organochlorverbindungen: Chlorthalonil, Dichlofluanid, Dichlorphen, Flusulfamide, Hexachlorbenzol, Pencycuron, Pentachlorphenol und dessen Salze, Phthalid, Quintozen, Thiophanat-Methyl, Tolylfluanid, N-(4-Chlor-2-nitro-phenyl)-N-ethyl-4-methyl-benzolsulfonamid;
- Anorganische Wirkstoffe: Phosphorige Säure und ihre Salze, Bordeaux Brühe, Kupfersalze wie beispielsweise Kupferacetat, Kupferhydroxid, Kupferoxychlorid, basisches Kupfersulfat, Schwefel;
- Sonstige: Biphenyl, Bronopol, Cyflufenamid, Cymoxanil, Diphenylamin, Metrafenon, Mildiomycin, Oxin-Kupfer, Prohexadion-Calcium, Spiroxamin, Tolylfluanid, N-(Cyclopropylmethoxyimino-(6-difluormethoxy-2,3-difluor-phenyl)-methyl)-2-phenylacetamid, N'-(4-(4-Chlor-3-trifluormethyl-phenoxy)-2,5-dimethyl-phenyl)-N-ethyl-N-methylformamidin, N'-(4-(4-Fluor-3-trifluormethyl-phenoxy)-2,5-dimethyl-phenyl)-N-ethyl-N-methylformamidin, N'-(2-Methyl-5-trifluormethyl-4-(3-trimethylsilanyl-propoxy)-phenyl)-N-ethyl-N-methylformamidin, N'-(5-Difluormethyl-2-methyl-4-(3-trimethylsilanylpropoxy)-phenyl)-N-ethyl-N-methylformamidin;

G) Wachstumsregler

Abscisinsäure, Amidochlor, Ancymidol , 6-Benzylaminopurin, Brassinolid, Butralin, Chlormequat (Chlormequatchlorid), Cholinchlorid, Cyclanilid, Daminozid, Dikegulac, Dimethipin, 2,6-Dimethylpuridin, Ethephon, Flumetralin, Flurprimidol , Fluthiacet, Forchlorfenuron, Gibberellinsäure, Inabenfid, Indol-3-essigsäure, Maleinsäurehydrazid, Mefluidid, Mepiquat (Mepiquatchlorid), Metconazol, Naphthalenessigsäure, N-6-Benzyladenin, Paclobutrazol, Prohexadion (Prohexadion-Calcium), Prohydrojasmon, Thidiazuron, Triapenthenol, Tributylphosphorotrithioat, 2,3,5-tri-Jodbenzoesäure, Trinexapac-ethyl und Uniconazol;

H) Herbizide

- Acetamide: Acetochlor, Alachlor, Butachlor, Dimethachlor, Dimethenamid, Flufenacet, Mefenacet, Metolachlor, Metazachlor, Napropamid, Naproanilid, Pethoxamid, Pretilachlor, Propachlor, Thenylchlor;
- Aminosäureanaloga: Bilanafos, Glyphosat, Glufosinat, Sulfosat;
- Aryloxyphenoxypropionate: Clodinafop, Cyhalofop-butyl, Fenoxaprop, Fluazifop, Haloxyfop, Metamifop, Propaquizafop, Quizalofop, Quizalofop-P-tefuryl;
- Bipyridyle: Diquat, Paraquat;
- Carbamate und Thiocarbamate: Asulam, Butylate, Carbetamide, Desmedipham, Dimepiperat, Eptam (EPTC), Esprocarb, Molinate, Orbencarb, Phenmedipham, Prosulfocarb, Pyributicarb, Thiobencarb, Triallate;
- Cyclohexanedione: Butroxydim, Clethodim, Cycloxydim, Profoxydim, Sethoxydim, Tepraloxydim, Tralkoxydim;
- Dinitroaniline: Benfluralin, Ethalfluralin, Oryzalin, Pendimethalin, Prodiamine, Trifluralin;
- Diphenylether: Acifluorfen, Aclonifen, Bifenox, Diclofop, Ethoxyfen, Fomesafen, Lactofen, Oxyfluorfen;
- Hydroxybenzonitrile: Bromoxynil, Dichlobenil, Ioxynil;
- Imidazolinone: Imazamethabenz, Imazamox, Imazapic, Imazapyr, Imazaquin, Imazethapyr;
- Phenoxyessigsäuren: Clomeprop, 2,4-Dichlorphenoxyessigsäure (2,4-D), 2,4-DB, Dichlorprop, MCPA, MCPA-thioethyl, MCPB, Mecoprop;
- Pyrazine: Chloridazon, Flufenpyr-ethyl, Fluthiacet, Norflurazon, Pyridat;
- Pyridine: Aminopyralid, Clopyralid, Diflufenican, Dithiopyr, Fluridone, Fluroxypyr, Picloram, Picolinafen, Thiazopyr, Thiazopyr;
- Sulfonylharnstoffe: Amidosulfuron, Azimsulfuron, Bensulfuron, Chlorimuron-Ethyl, Chlorsulfuron, Cinosulfuron, Cyclosulfamuron, Ethoxysulfuron, Flazasulfuron, Flucetosulfuron, Flupyrsulfuron, Foramsulfuron, Halosulfuron, Imazosulfuron, Iodosulfuron, Mesosulfuron, Metsulfuron-methyl, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, 1-((2-Chlor-6-propyl-imidazo[1,2-b]pyridazin-3-yl)sulfonyl)-3-(4,6-dimethoxy-pyrimidin-2-yl)harnstoff;
- Triazine: Ametryn, Atrazin, Cyanazin, Dimethametryn, Ethiozin, Hexazinon, Metamitron, Metribuzin, Prometryn, Simazine, Terbuthylazine, Terbutryn, Triaziflam;
- Harnstoffe: Chlorotoluron, Daimuron, Diuron, Fluometuron, Isoproturon, Linuron, Methabenzthiazuron,Tebuthiuron;

- andere Hemmstoffe der Acetolactatsynthase: Bispyribac-Natrium, Cloransulam-Methyl, Diclosulam, Florasulam, Flucarbazone, Flumetsulam, Metosulam, Orthosulfamuron, Penoxsulam, Propoxycarbazone, Pyribambenz-Propyl, Pyribenzoxim, Pyriftalid, Pyriminobac-methyl, Pyrimisulfan, Pyrithiobac, Pyroxasulfone, Pyroxsulam;
- Sonstige: Amicarbazon, Aminotriazol, Anilofos, Beflubutamid, Benazolin, Bencarbazon, Benfluresate, Benzofenap, Bentazone, Benzobicyclon, Bromacil, Bromobutide, Butafenacil, Butamifos, Cafenstrole, Carfentrazone, Cinidon-Ethlyl, Chlorthal, Cinmethylin, Clomazone, Cumyluron, Cyprosulfamide, Dicamba, Difenzoquat, Diflufenzopyr, Drechslera monoceras, Endothal, Ethofumesat, Etobenzanid, Fentrazamide, Flumiclorac-Pentyl, Flumioxazin, Flupoxam, Fluorochloridone, Flurtamone, Indanofan, Isoxaben, Isoxaflutole, Lenacil, Propanil, Propyzamide, Quinclorac, Quinmerac, Mesotrione, methyl arsonic acid, Naptalam, Oxadiargyl, Oxadiazon, Oxaziclomefone, Pentoxazone, Pinoxaden, Pyraclonil, Pyraflufen-ethyl, Pyrasulfotol, Pyrazoxyfen, Pyrazolynat, Quinoclamine, Saflufenacil, Sulcotrion, Sulfentrazon, Terbacil, Tefuryltrione, Tembotrione, Thiencarbazone, Topramezon, 4-Hydroxy-3-[2-(2-methoxyethoxymethyl)-6-trifluormethyl-pyridin-3-carbonyl]-bicyclo[3.2.1]oct-3-en-2-on, (3-[2-Chlor-4-fluor-5-(3-methyl-2,6-dioxo-4-trifluormethyl-3,6-dihydro-2H-pyrimidin-1-yl)-phenoxy]-pyridin-2-yloxy)-essigsäureethylester, 6-Amino-5-chlor-2-cyclopropyl-pyrimidin-4-carboxylsäuremethylester, 6-Chlor-3-(2-cyclopropyl-6-methyl-phenoxy)-pyridazin-4-ol, 4-Amino-3-chlor-6-(4-chlor-phenyl)-5-fluor-pyridin-2-carboxylsäure, 4-Amino-3-chlor-6-(4-chlor-2-fluor-3-methoxy-phenyl)-pyridin-2-carboxylsäuremethylester, und 4-Amino-3-chlor-6-(4-chloro-3-dimethylamino-2-fluorphenyl)-pyridin-2-carboxylsäuremethylester.

I) Insektizide

- Organo(thio)phosphate: Acephat, Azamethiphos, Azinphos-methyl, Chlorpyrifos, Chlorpyrifos-Methyl, Chlorfenvinphos, Diazinon, Dichlorvos, Dicrotophos, Dimethoat, Disulfoton, Ethion, Fenitrothion, Fenthion, Isoxathion, Malathion, Methamidophos, Methidathion, Methyl-Parathion, Mevinphos, Monocrotophos, Oxydemeton-Methyl, Paraoxon, Parathion, Phenthoate, Phosalone, Phosmet, Phosphamidon, Phorate, Phoxim, Pirimiphos-Methyl, Profenofos, Prothiofos, Sulprophos, Tetrachlorvinphos, Terbufos, Triazophos, Trichlorfon;
- Carbamate: Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Pirimicarb, Propoxur, Thiodicarb, Triazamate;
- Pyrethroide: Allethrin, Bifenthrin, Cyfluthrin, Cyhalothrin, Cyphenothrin, Cypermethrin, alpha-Cypermethrin, beta-Cypermethrin, zeta-Cypermethrin, Deltamethrin, Esfenvalerat, Etofenprox, Fenpropathrin, Fenvalerate, Imiprothrin, Lambda-Cyhalothrin, Permethrin, Prallethrin, Pyrethrin I und II, Resmethrin, Silafluofen, tau-Fluvalinat, Tefluthrin, Tetramethrin, Tralomethrin, Transfluthrin, Profluthrin, Dimefluthrin,
- Hemmstoffe des Insektenwachstums: a) Chitinsynthese-Hemmstoffe: Benzoylharnstoffe: Chlorfluazuron, Cyramazin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazol, Clofentazin; b) Ecdyson-Antagonisten: Halofenozid, Methoxyfenozid, Tebufenozid, Azadirachtin; c) Juvenoide: Pyriproxyfen, Methoprene, Fenoxycarb; d) Lipidbiosynthese-Hemmstoffe: Spirodiclofen, Spiromesifen, Spirotetramat;
- Nikotinreceptor-Agonisten/Antagonisten: Clothianidin, Dinotefuran, Imidacloprid, Thiamethoxam, Nitenpyram, Acetamiprid, Thiacloprid, 1-(2-chloro-thiazol-5-yl-methyl)-2-nitrimino-3,5-dimethyl-[1,3,5]triazinan;
- GABA-Antagonisten: Endosulfan, Ethiprol, Fipronil, Vaniliprol, Pyrafluprol, Pyriprol, 5-Amino-1-(2,6-dichlor-4-methyl-phenyl)-4-sulfinamoyl-1H-pyrazol-3-thiocarbonsäureamid;
- Macrocyclische Lactone: Abamectin, Emamectin, Milbemectin, Lepimectin, Spinosad, Spinetoram;
- Mitochondriale Elektronentransportketten-Inhibitor (METI) I Akarizide: Fenazaquin, Pyridaben, Tebufenpyrad, Tolfenpyrad, Flufenerim;
- METI II und III Substanzen: Acequinocyl, Fluacyprim, Hydramethylnon;
- Entkoppler: Chlorfenapyr;
- Hemmstoffe der oxidativen Phosphorylierung: Cyhexatin, Diafenthiuron, Fenbutatinoxid, Propargit;
- Hemmstoffe der Häutung der Insekten: Cryomazin;
- Hemmstoffe von ‚mixed function oxidases': Piperonylbutoxid;
- Natrumkanalblocker: Indoxacarb, Metaflumizon;
- Sonstige: Benclothiaz, Bifenazate, Cartap, Flonicamid, Pyridalyl, Pymetrozin, Schwefel, Thiocyclam, Flubendiamid, Chlorantraniliprol, Cyazypyr (HGW86); Cyenopyrafen, Flupyrazofos, Cyflumetofen, Amidoflumet, Imicyafos, Bistrifluron, und Pyrifluquinazon.

Die vorliegende Erfindung betrifft insbesondere auch fungizide Zusammensetzungen, die neben den Mischungen der Verbindung der Formel I und der Verbindung der Formel II wenigstens einen weiteren Pflanzenschutzwirkstoff, insbesondere wenigstens einen fungiziden Wirkstoff, z. B. einen oder mehrere, z.B. 1 oder 2 Wirkstoffe der vorgenannten

Gruppen A) bis F) und gegebenenfalls einen oder mehrere landwirtschaftlich geeignete Träger enthalten. Im Hinblick auf eine Senkung der Aufwandmengen sind diese Mischungen von Interesse, da viele bei verringerter Gesamtmenge an ausgebrachten Wirkstoffen eine verbesserte Wirkung gegen Schadpilze, insbesondere für bestimmte Indikationen, zeigen. Durch gleichzeitige gemeinsame oder getrennte Anwendung der Mischungen der Verbindung der Formel I und der Verbindung der Formel II mit mindestens einem Wirkstoff der Gruppen A) bis I) kann die fungizide Wirksamkeit in überadditivem Maße erhöht werden.

Gemeinsame Anwendung im Sinne dieser Anmeldung bedeutet, dass die mit wenigstens einem weiteren Wirkstoff versehene erfindungsgemäße Mischung der Verbindung der Formel I und der Verbindung der Formel II gleichzeitige am Wirkort (d.h. die zu bekämpfenden pflanzenschädigenden Pilzen und deren Lebensraum wie befallene Pflanzen, Pflanzenvermehrungsmaterialien, insbesondere Saatgut, Erdböden, Materialien oder Räume sowie die vor Pilzbefall zu schützenden Pflanzen, Pflanzenvermehrungsmaterialien, insbesondere Saatgut, Erdböden, Materialien oder Räume) in einer für eine wirksame Kontrolle des Pilzwachstums ausreichenden Menge vorliegen. Dies kann dadurch erreicht werden, dass man die Mischungen der Verbindung der Formel I und der Verbindung der Formel II der diese mit mindestens einem weiteren Wirkstoff versehene Mischung gemeinsam in einer gemeinsamen Wirkstoffaufbereitung oder in mindestens zwei getrennten Wirkstoffaufbereitungen gleichzeitig ausbringt oder indem man die Wirkstoffe nacheinander am Wirkort appliziert, wobei der zeitliche Abstand der einzelnen Wirkstoffapplikationen so gewählt wird, dass der zuerst ausgebrachte Wirkstoff zum Zeitpunkt der Applikation des/der weiteren Wirkstoffs/stoffe in ausreichender Menge am Wirkort vorliegt. Die zeitliche Reihenfolge des Ausbringens der Wirkstoffe ist von untergeordneter Bedeutung.

In den erfindungsgemäßen binären Mischungen, d. h. erfindungsgemäßen Zusammensetzungen, die Mischungen der Verbindung der Formel I und der Verbindung der Formel II enthalten, hängt das Gewichtsverhältnis von Verbindung I zur Verbindung II von den Eigenschaften der jeweiligen Wirkstoffe ab, üblicherweise liegt es im Bereich von 1:100 bis 100:1, häufig im Bereich von 1:50 bis 50:1, vorzugsweise im Bereich von 1:20 bis 20:1, insbesondere im Bereich von 1:10 bis 10:1.

In ternären Mischungen, d. h. erfindungsgemäßen Zusammensetzungen, die Mischungen der Verbindung der Formel I und der Verbindung der Formel II und einen weiteren Wirkstoff, z. B. aus den Gruppen A) bis I) enthalten, hängt das Gewichtsverhältnis von Mischungen der Verbindung der Formel I und der Verbindung der Formel II zum weiteren Wirkstoff von den Eigenschaften der jeweiligen Wirkstoffe ab, vorzugsweise liegt es im Bereich von 1:50 bis 50:1 und insbesondere im Bereich von 1:10 bis 10:1. Das Gewichtsverhältnis von Mischungen der Verbindung der Formel I und der Verbindung der Formel II zum 2. weiteren Wirkstoff liegt vorzugsweise im Bereich von 1:50 bis 50:1, insbesondere im Bereich von 1:10 bis 10:1.

Die Komponenten der erfindungsgemäßen Zusammensetzung können einzeln oder bereits gemischt oder als Teile nach dem Baukastenprinzip (kit of parts) verpackt und weiterverwendet werden.

In einer Ausgestaltung der Erfindung können die Kits (Baukästen) ein oder mehrere, auch alle, Komponenten enthalten, die zur Herstellung einer erfindungsgemäßen agrochemischen Zusammensetzung verwendet werden können. Bespielsweise können diese Kits ein oder mehrere Fungizid-Komponente(n) und/oder eine Adjuvant-Komponente und/oder eine Insektizid-Komponente und/oder eine Wachstumsregulator-Komponente und/oder ein Herbizid enthalten. Ein oder mehrere Komponenten können miteinander kombiniert oder vorformuliert vorliegen. In den Ausgestaltungen, in denen mehr als zwei Komponenten in einem Kit bereitgestellt werden, können die Komponenten miteinander kombiniert und in einem einzelnen Behältnis wie einem Gefäß, Flasche, Dose, Beutel, Sack oder Kanister verpackt vorliegen. In anderen Ausgestaltungen, können zwei oder mehr Komponenten eines Kits getrennt verpackt sein, d. h. nicht vorformuliert bzw. gemischt. Kits können ein oder mehrere gesonderte Behältnisse wie Gefäße, Flaschen, Dosen, Beutel, Säcke oder Kanister enthalten, wobei jedes Behältnis eine gesonderte Komponente der agrochemischen Zusammensetzung enthält. Die Komponenten der erfindungsgemäßen Zusammensetzung können einzeln oder bereits gemischt oder als Teile nach dem Baukastenprinzip (‚kit of parts') verpackt und weiterverwendet werden. In beiden Formen kann eine Komponente getrennt oder zusammen mit den weiteren Komponenten oder als Bestandteil eines erfindungsgemäßen ‚kit of parts' zur Herstellung der erfindungsgemäßen Mischung verwendet werden.

Der Anwender verwendet die erfindungsgemäße Zusammensetzung üblicherweise für die Anwendung in einer Vordosiereinrichtung, im Rückenspritzer, im Spritztank oder im Sprühflugzeug. Dabei wird die agrochemische Zusammensetzung mit Wasser und/oder Puffer auf die gewünschte Anwendungskonzentration gebracht, wobei gegebenenfalls weitere Hilfsstoffe zugegeben werden, und so die anwendungsbereite Spritzbrühe bzw. die erfindungsgemäße agrochemische Zusammensetzung erhalten wird. Üblicherweise werden 50 bis 500 Liter der anwendungsbereiten Spritzbrühe pro Hektar landwirtschaftlicher Nutzfläche aufgebracht, bevorzugt 100 bis 400 Liter.

Nach einer Ausführungsform kann der Anwender einzelne Komponenten wie z. B. Teile eines Kits oder einer Zweier- oder Dreiermischung der erfindungsgemäßen Zusammensetzung selber im Spritztank mischen und gegebenenfalls weitere Hilfsstoffe zugeben (Tankmix).

In einer weiteren Ausführungsform kann der Anwender sowohl einzelne Komponenten der erfindungsgemäßen Zusammensetzung als auch teilweise vorgemischte Komponenten, beispielsweise Komponenten enthaltend die Mischungen der Verbindung der Formel I und der Verbindung der Formel II and Wirkstoffe aus den Gruppen A) bis I), im

Spritztank mischen und gegebenenfalls weitere Hilfsmittel zugeben (Tankmix).

In einer weiteren Ausführungsform kann der Anwender sowohl einzelne Komponenten der erfindungsgemäßen Zusammensetzung als auch teilweise vorgemischte Komponenten, beispielsweise Komponenten enthaltend Mischungen der Verbindung der Formel I und der Verbindung der Formel II und/oder Wirkstoffe aus den Gruppen A) bis I), gemeinsam (z. B. als Tankmix) oder nacheinander anwenden.

Bevorzugt sind Zusammensetzungen der Mischungen der Verbindung der Formel I und der Verbindung der Formel II (Komponente 1) mit mindestens einem Wirkstoff aus der Gruppe A) (Komponente 2) der Strobilurine und besonders ausgewählt aus Azoxystrobin, Dimoxystrobin, Fluoxastrobin, Kresoxim-methyl, Orysastrobin, Picoxystrobin, Pyraclostrobin und Trifloxystrobin.

Bevorzugt sind auch Zusammensetzungen der Mischungen der Verbindung der Formel I und der Verbindung der Formel II mit mindestens einem Wirkstoff ausgewählt aus der Gruppe B) (Komponente 2) der Carboxamide und besonders ausgewählt aus Fenhexamid, Metalaxyl, Mefenoxam, Ofurace, Dimethomorph, Flumorph, Fluopicolid (Picobenzamid), Zoxamid, Carpropamid und Mandipropamid.

Bevorzugt sind auch Zusammensetzungen der Mischungen der Verbindung der Formel I und der Verbindung der Formel II mit mindestens einem Wirkstoff ausgewählt aus der Gruppe C) (Komponente 2) der Azole und besonders ausgewählt aus Cyproconazol, Difenoconazol, Epoxiconazol, Fluquinconazol, Flusilazol, Flutriafol, Metconazol, Myclobutanil, Penconazol, Propiconazol, Prothioconazol, Triadimefon, Triadimenol, Tebuconazol, Tetraconazol, Triticonazol, Prochloraz, Cyazofamid, Benomyl, Carbendazim und Ethaboxam.

Bevorzugt sind auch Zusammensetzungen der Mischungen der Verbindung der Formel I und der Verbindung der Formel II mit mindestens einem Wirkstoff ausgewählt aus der Gruppe D) (Komponente 2) der stickstoffhaltigen Heterocyclylverbindungen und besonders ausgewählt aus Fluazinam, Cyprodinil, Fenarimol, Mepanipyrim, Pyrimethanil, Triforin, Fludioxonil, Fodemorph, Fenpropimorph, Tridemorph, Fenpropidin, Iprodion, Vinclozolin, Famoxadon, Fenamidon, Probenazol, Proquinazid, Acibenzolar-S-methyl, Captafol, Folpet, Fenoxanil und Quinoxyfen.

Bevorzugt sind auch Zusammensetzungen der Mischungen der Verbindung der Formel I und der Verbindung der Formel II mit mindestens einem Wirkstoff ausgewählt aus der Gruppe E) (Komponente 2) der Carbamate und besonders ausgewählt aus Mancozeb, Metiram, Propineb, Thiram, Iprovalicarb, Flubenthiavalicarb und Propamocarb.

Bevorzugt sind auch Zusammensetzungen der Mischungen der Verbindung der Formel I und der Verbindung der Formel II mit mindestens einem Wirkstoff ausgewählt aus den Fungiziden der Gruppe F) (Komponente 2) und besonders ausgewählt aus Dithianon, Fentin-Salze, wie Fentinacetat, Fosetyl, Fosetyl-Aluminium, $H_3PO_3$ und deren Salze, Chlorothalonil, Dichlofluanid, Thiophanat-methyl, Kupferacetat, Kupferhydroxid, Kupferoxychlorid, Kupfersulfat, Schwefel, Cymoxanil, Metrafenon, Spiroxamin und 5-chloro-7-(4-methylpiperidin-1-yl)-6-(2,4,6-trifluorophenyl)-[1,2,4]-triazolo[1,5-a]pyrimidin.

Die vorstehend als Wirkstoffe A) bis I) genannten Komponenten, ihre Herstellung und ihre Wirkung gegen Schadpilze sind bekannt (vgl.: http://www.atanwood.net/pesticides/); sie sind kommerziell erhältlich. Die nach IUPAC benannten Verbindungen, ihre Herstellung und ihre fungizide Wirkung sind ebenfalls bekannt (vgl. Can. J. Plant Sci. 48 (6), 587-94,1968; EP-A 141 317; EP-A 152 031; EP-A 226 917; EP-A 243 970; EP-A 256 503; EP-A 428 941; EP-A 532 022; EP-A 1 028 125; EP-A 1 035 122; EP-A 1 201 648; EP-A 1 122 244, JP 2002316902; DE 19650197; DE 10021412; DE 102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388; WO 03/66609; WO 03/74491; WO 04/49804; WO 05/120234; WO 05/123689; WO 05/123690; WO 05/63721; WO 05/87772; WO 05/87773; WO 06/15866; WO 06/87325; WO 06/87343; WO 07/82098; WO 07/90624).

Die Herstellung der Zusammensetzungen für Mischungen von Wirkstoffen erfolgt in bekannter Weise in Form von Zusammensetzungen enthaltend neben den Wirkstoffen ein Lösungsmittel oder flüssigen Trägerstoff, z. B. in der Weise wie für Zusammensetzungen der Mischungen der Verbindung der Formel I und der Verbindung der Formel II angegeben.

Bezüglich der üblichen Inhaltsstoffe solcher Zusammensetzungen wird auf die Ausführungen zu den Zusammensetzungen enthaltend die Mischungen der Verbindung der Formel I und der Verbindung der Formel II verwiesen.

Die Zusammensetzungen für Mischungen von Wirkstoffen eignen sich als Fungizide zur Bekämpfung von Schadpilzen. Sie zeichnen sich aus durch eine hervorragende Wirksamkeit gegen ein breites Spektrum von pflanzenpathogenen Pilzen einschließlich bodenbürtiger Pathogene, welche insbesondere aus den Klassen der Plasmodiophoromyceten, Peronosporomyceten (Syn. Oomyceten), Chytridiomyceten, Zygomyceten, Ascomyceten, Basidiomyceten und Deuteromyceten (Syn. Fungi imperfecti) stammen. Desweiteren wird auf die Ausführungen zur Wirksamkeit der Mischungen der Verbindung der Formel I und der Verbindung der Formel II and der Zusammensetzungen enthaltend die Mischungen der Verbindung der Formel I und der Verbindung der Formel II verwiesen.

Anwendungsbeispiele

Die fungizide Wirkung der Verbindungen und der Mischungen läßt sich durch folgende Versuche zeigen:

Wirkstoffaufbereitung

Die Wirkstoffe wurden getrennt oder gemeinsam als eine Stammlösung aufbereitet mit 25 mg Wirkstoff, welcher mit einem Gemisch aus Aceton und/oder DMSO und dem Emulgator Wettol EM 31 (Netzmittel mit Emulgier- und Dispergierwirkung auf der Basis ethoxylierter Alkylphenole) im Volumen-Verhältnis Lösungsmittel-Emulgator von 99 zu 1 ad 10 ml aufgefüllt wurde. Anschließend wurde ad 100 ml mit Wasser aufgefüllt. Diese Stammlösung wurde mit dem beschriebenen Lösungsmittel-Emulgator-Wasser Gemisch zu der unten angegeben Wirkstoffkonzentration verdünnt.

Anwendungsbeispiel 1 - Wirksamkeit gegen den Schorf an Apfelblättern verursacht durch Venturia inaequalis bei 1 Tag protektiver Anwendung (Ventin P1)

Blätter von Apfelpflanzen wurden mit wässriger Suspension in der unten angegebenen Wirkstoffkonzentration bis zur Tropfnässe besprüht. Am folgenden Tag wurden die behandelten Pflanzen mit einer wässrigen Sporensuspension von Venturia inaequalis inokuliert. Danach wurden die Apfelpflanzen zunächst für 24 Stunden in einer wasserdampfgesättigten Kammer bei 24° C und anschließend für 21 Tage im Gewächshaus bei Temperaturen zwischen 20 und 24° C aufgestellt. Dann wurde das Ausmaß der Befallsentwicklung auf der Blattoberseite visuell ermittelt.

Die ermittelten Werte für den Prozentanteil Befall auf den Blättern wurden in Wirkungsgrade % der unbehandelten Kontrolle umgerechnet. Wirkungsgrad 0 bedeutet gleicher Befall wie in der unbehandelten Kontrolle; Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Tabelle 1

| Wirkstoff/-Wirkstoffkombination | Konz (ppm) | Verhältnis | Beobachtete Wirkung (%) | Berechnete Wirkung nach Colby (%) | Synergismus | Höhe des Synergismus (%) |
|---|---|---|---|---|---|---|
| unbehandelt | | | 81% Befall | | | |
| Pyrimethanil | 4<br>1 | | 52<br>0 | | | |
| Metiram | 16<br>4 | | 0<br>0 | | | |
| Pyrimethanil<br>Metiram | 4<br>16 | 1 : 4 | 95 | 52 | Ja | 43 |
| Pyrimethanil<br>Metiram | 1<br>4 | 1 : 4 | 98 | 0 | Ja | 98 |

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R.

(Calculating synergistic and antagonistic responses of herbicide Combinations", Weeds, 15, S. 20 - 22, 1967) ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Aus den Ergebnissen der Versuche in den Tabellen 1 und 2 geht hervor, dass die erfindungsgemäßen Mischungen aufgrund des Synergismus erheblich besser wirksam sind, als nach der Colby-Formel vorausberechnet.

## Patentansprüche

1. Fungizide Mischungen, enthaltend als aktive Komponenten:

    1) ein Pyrimidinderivat-der Formel I

    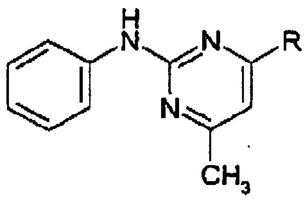

    I

    in der R für Methyl, steht,
    und
    2) Metiram II

    in einer synergistisch wirksamen Menge.

2. Fungizide Mischungen gemäß Anspruch 1, enthaltend die Verbindung der Formel I und die Verbindung der Formel II in einem Gewichtsverhältnis von 100:1 bis 1:100.

3. Fungizide Mischungen gemäß Anspruch 1 bis 2, enthaltend einen weiteren Wirkstoff.

4. Fungizides Mittel, enthaltend einen flüssigen oder festen Trägerstoff und eine Mischung gemäß einem der Ansprüche 1 bis 3.

5. Verfahren zur Bekämpfung von pflanzenpathogenen Schadpilzen, **dadurch gekennzeichnet, dass** man die Pilze, deren Lebensraum oder die vor Pilzbefall zu schützenden Pflanzen, den Boden oder Saatgüter, mit einer synergistisch wirksamen Menge der Verbindung I und der Verbindung II gemäß Anspruch 1 behandelt.

6. Verfahren nach Anspruch 5, **dadurch gekennzeichnet, dass** man die Verbindungen I und II gemäß Anspruch 1 gleichzeitig, und zwar gemeinsam oder getrennt oder nacheinander ausbringt.

**7.** Verfahren nach Ansprüchen 5 oder 6, **dadurch gekennzeichnet, dass** man die Verbindungen 1 und II gemäß Anspruch 1 oder die Mischung gemäß einem der Ansprüche 1 bis 4 in einer Menge von 5 g/ha bis 2000 g/ha aufwendet.

**8.** Verfahren nach Ansprüchen 5 oder 6, **dadurch gekennzeichnet, dass** man die Verbindungen I und II gemäß Anspruch 1 oder die Mischung gemäß einem der Ansprüche 1 bis 3 in einer Menge von 1 bis 1000 g/100 kg Saatgut anwendet.

**9.** Verfahren nach einem der Ansprüche 5 oder 6, **dadurch gekennzeichnet, dass** Phakopsara Arten bekämpft werden.

**10.** Saatgut, enthaltend eine Mischung gemäß Anspruch1 in einer Menge von 1 bis 1000 g/100 kg.

**11.** Verwendung der Verbindungen I und II gemäß Anspruch 1 zur Herstellung eines Mittels gemäß Anspruch 4.

## Claims

**1.** A fungicidal mixture comprising, as active components:

1) a pyrimidine derivative of the formula I

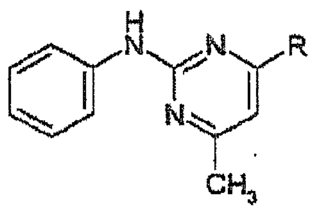

I

in which R represents methyl,
and
2) metiram II

in a synergistically effective amount.

**2.** The fungicidal mixture according to claim 1, comprising the compound of the formula I and the compound of the formula II in a weight ratio of from 100:1 to 1:100.

**3.** The fungicidal mixture according to claim 1 or 2, comprising a further active compound.

**4.** A fungicidal composition comprising a liquid or solid carrier and a mixture according to any of claims 1 to 3.

**5.** A method for controlling phytopathogenic harmful fungi, which comprises treating the fungi, their habitat or the seed, the soil or the plants to be protected against fungal attack with a synergistically effective amount of the compound I and the compound II according to claim 1.

**6.** The method according to claim 5, wherein the compounds I and II according to claim 1 are applied simultaneously, that is jointly or separately, or in succession.

**7.** The method according to claim 5 or 6, wherein the compounds I and II according to claim 1 or the mixture according to any of claims 1 to 4 are/is applied in an amount of from 5 g/ha to 2000 g/ha.

**8.** The method according to claim 5 or 6, wherein the compounds I and II according to claim 1 or the mixture according to any of claims 1 to 3 are/is applied in an amount of from 1 to 1000 g/100 kg of seed.

**9.** The method according to either of claims 5 and 6, wherein Phakopsara species are controlled.

**10.** Seed comprising a mixture according to claim 1 in an amount of from 1 to 1000 g/100 kg.

**11.** The use of the compounds I and II according to claim 1 for preparing a composition according to claim 4.

**Revendications**

**1.** Mélanges fongicides contenant, comme composants actifs :

1) un dérivé de pyrimidine de la formule I :

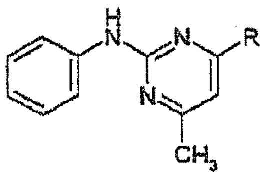

I

dans laquelle R représente méthyle,
et
2) du métiram

en une quantité efficace du point de vue synergique.

**2.** Mélanges fongicides selon la revendication 1, contenant le composé de la formule I et le composé de la formule II dans un rapport pondéral de 100/1 à 1/100.

**3.** Mélanges fongicides selon les revendications 1 et 2, contenant un autre principe actif.

**4.** Produit fongicide, contenant un support liquide ou solide et un mélange selon l'une quelconque des revendications 1 à 3.

**5.** Procédé pour lutter contre les champignons nuisibles phytopathogènes, **caractérisé en ce qu'**on traite les champignons, leur environnement ou les plantes, sols ou semences à protéger contre une infestation par ces champignons par une quantité efficace du point de vue synergique du composé I et du composé II selon la revendication 1.

**6.** Procédé selon la revendication 5, **caractérisé en ce qu'**on épand les composés I et II selon la revendication 1 soit simultanément, et cela conjointement ou séparément, soit successivement.

**7.** Procédé selon la revendication 5 ou 6, **caractérisé en ce qu'**on applique les composés I et II selon la revendication 1 ou le mélange selon l'une quelconque des revendications 1 à 4 en une quantité de 5 g/ha à 2000 g/ha.

**8.** Procédé selon la revendication 5 ou 6, **caractérisé en ce qu'**on applique les composés I et II selon la revendication 1 ou le mélange selon l'une quelconque des revendications 1 à 3 en une quantité de 1 à 1000 g/100 kg de semences.

**9.** Procédé selon la revendication 5 ou 6, **caractérisé en ce qu'**on lutte contre les types de Phakopsara.

**10.** Semences, contenant un mélange selon la revendication 1, en une quantité de 1 à 1000 g/100 kg.

**11.** Utilisation des composés I et II selon la revendication 1, pour la préparation d'un produit selon la revendication 4.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 257993 A
- US 5013659 A
- US 6222100 B
- WO 0182685 A
- WO 0026390 A
- WO 9741218 A
- WO 9802526 A
- WO 9802527 A
- WO 04106529 A
- WO 0520673 A
- WO 0314357 A
- WO 0313225 A
- WO 0314356 A
- WO 0416073 A
- WO 9200377 A
- EP 242236 A
- EP 242246 A
- US 5559024 A
- WO 2002015701 A
- EP 374753 A
- WO 9307278 A
- WO 9534656 A
- EP 427529 A
- EP 451878 A
- WO 0318810 A
- WO 0352073 A
- WO 03018810 A
- EP 0392225 A
- US 3060084 A
- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A
- EP 141317 A
- EP 152031 A
- EP 226917 A
- EP 243970 A
- EP 256503 A
- EP 428941 A
- EP 532022 A
- EP 1028125 A
- EP 1035122 A
- EP 1201648 A
- EP 1122244 A
- JP 2002316902 B
- DE 19650197
- DE 10021412
- DE 102005009458
- US 3296272 A
- US 3325503 A
- WO 9846608 A
- WO 9914187 A
- WO 9924413 A
- WO 9927783 A
- WO 0029404 A
- WO 0046148 A
- WO 0065913 A
- WO 0154501 A
- WO 0156358 A
- WO 0222583 A
- WO 0240431 A
- WO 0310149 A
- WO 0311853 A
- WO 0314103 A
- WO 0316286 A
- WO 0353145 A
- WO 0361388 A
- WO 0366609 A
- WO 0374491 A
- WO 0449804 A
- WO 05120234 A
- WO 05123689 A
- WO 05123690 A
- WO 0563721 A
- WO 0587772 A
- WO 0587773 A
- WO 0615866 A
- WO 0687325 A
- WO 0687343 A
- WO 0782098 A
- WO 0790624 A

**In der Beschreibung aufgeführte Nicht-Patentliteratur**


- **Sholberg et al.** Effect of preharvest application of Cyprodinil on post harvest decay of apples caused by Botrytis cinerea. *Plant Disease,* 2003, vol. 87 (9), 1067-1071
- The Pesticide Manual. 666
- **Browning.** Agglomeration. *Chemical Engineering,* 04. Dezember 1967, 147-48
- Perry's Chemical Engineer's Handbook. McGraw-Hill, 1963, 8-57
- **Klingman.** Weed Control as a Science. John Wiley & Sons, 1961
- **Hance et al.** Weed Control Handbook. Blackwell Scientific Publications, 1989
- **Mollet, H. ; Grubemann, A.** Formulation technology. Wiley VCH Verlag, 2001
- *Can. J. Plant Sci.,* 1968, vol. 48 (6), 587-94
- **Colby, S. R.** Calculating synergistic and antagonistic responses of herbicide Combinations. *Weeds,* 1967, vol. 15, 20-22